(19) **Europäisches Patentamt / European Patent Office / Office européen des brevets**

(11) **EP 4 484 045 B1**

(12) **EUROPEAN PATENT SPECIFICATION**

(45) Date of publication and mention of the grant of the patent:
**01.04.2026 Bulletin 2026/14**

(21) Application number: **23815469.4**

(22) Date of filing: **27.01.2023**

(51) International Patent Classification (IPC):
**B23K 11/16** *(2006.01)*   **B23K 11/11** *(2006.01)*
**B23K 11/24** *(2006.01)*   **B23K 101/00** *(2006.01)*
**B23K 101/34** *(2006.01)*   **B23K 103/04** *(2006.01)*

(52) Cooperative Patent Classification (CPC):
**B23K 11/11; B23K 11/115; B23K 11/16;**
**B23K 11/166; B23K 11/24;** B23K 2101/006;
B23K 2101/34; B23K 2103/04

(86) International application number:
**PCT/JP2023/002727**

(87) International publication number:
**WO 2023/233705 (07.12.2023 Gazette 2023/49)**

(54) **WELDED JOINT, WELDED MEMBER, METHOD OF PRODUCING SAME, AND RESISTANCE SPOT WELDING METHOD**

SCHWEISSVERBINDUNG, SCHWEISSBAUTEIL, VERFAHREN ZU DESSEN HERSTELLUNG UND WIDERSTANDSPUNKTSCHWEISSVERFAHREN

JOINT SOUDÉ, ELEMENT SOUDÉ, PROCEDE DE FABRICATION DE CELUI-CI, ET PROCEDE DE SOUDAGE PAR POINTS PAR RESISTANCE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **03.06.2022 JP 2022091184**

(43) Date of publication of application:
**01.01.2025 Bulletin 2025/01**

(73) Proprietor: **JFE Steel Corporation**
**Tokyo 100-0011 (JP)**

(72) Inventors:
• **YAMAGISHI, Daiki**
  **Tokyo 100-0011 (JP)**
• **SAWANISHI, Chikaumi**
  **Tokyo 100-0011 (JP)**
• **KAWABE, Nao**
  **Tokyo 100-0011 (JP)**
• **TAKASHIMA, Katsutoshi**
  **Tokyo 100-0011 (JP)**
• **TANIGUCHI, Koichi**
  **Tokyo 100-0011 (JP)**
• **MATSUDA, Hiroshi**
  **Tokyo 100-0011 (JP)**

(74) Representative: **Haseltine Lake Kempner LLP**
**Bürkleinstrasse 10**
**80538 München (DE)**

(56) References cited:
EP-A1- 3 278 917          WO-A1-2017/038981
WO-A1-2019/124464    WO-A1-2020/212741
JP-A- 2003 236 676       JP-A- 2010 247 215
JP-A- 2019 072 764       JP-A- 2020 127 958
JP-A- 2020 127 958       US-A1- 2011 253 681
US-A1- 2012 193 331

**Description**

TECHNICAL FIELD

The present invention relates to a welded joint, a welded member, a method of producing same, and a resistance spot welding method.

BACKGROUND

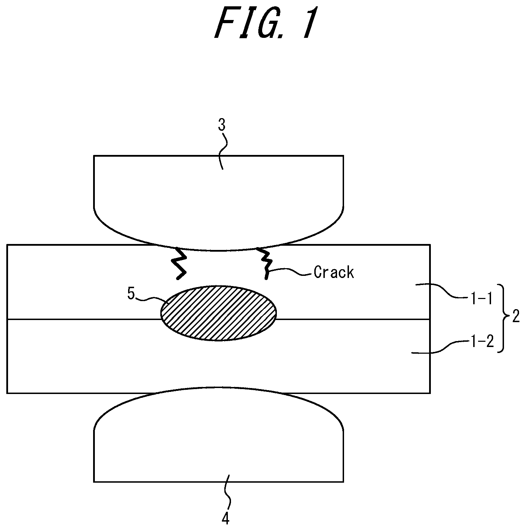

In the assembly of automobiles, resistance spot welding, a type of lap resistance welding, is often used to join overlapping steel sheets from the viewpoint of cost and manufacturing efficiency. As illustrated in FIG. 1, for example, this welding method uses a pair of welding electrodes 3, 4 (hereinafter, the electrode disposed on the vertically upward side is also referred to as the upper electrode 3 and the electrode disposed on the vertically downward side is also referred to as the lower electrode 4) to squeeze a sheet combination 2 of overlapped steel sheets 1-1, 1-2 (hereinafter, the steel sheet disposed uppermost in the vertical direction is also referred to as the upper steel sheet 1-1 and the steel sheet disposed lowermost in the vertical direction is also referred to as the lower steel sheet 1-2). Pressure is applied from the welding electrodes 3, 4 from above and below while a welding current is passed between the welding electrodes 3, 4 to join the sheet combination 2. In this welding method, a point-like welded portion is obtained by using resistance heat generated by the welding current. The welded portion is called a nugget 5. That is, the nugget 5 is the portion that melts and solidifies at the contact point of the overlapped steel sheets when the electric current flows through the steel sheets. The steel sheets are spot-welded by the nugget 5.

In recent years, the automobile field has been promoting weight reduction of automotive bodies to improve fuel efficiency. As a result, the application of high strength steel sheets to automotive parts is increasing. Further, among automotive parts, for parts applied to locations that are exposed to rainwater, coated or plated steel sheets having antirust properties such as galvanized steel sheets (surface-treated steel sheets) are used from the viewpoint of corrosion resistance. Here, a coated or plated steel sheet is a steel sheet having a metal coating or plating layer on a surface of a base metal (base steel sheet). As a metal coating or plating layer, examples include zinc coating or plating as typified by electrogalvanized plating and hot-dip galvanizing (including galvannealing), zinc alloy coating or plating containing elements such as aluminum and magnesium in addition to zinc, and aluminum-zinc alloy coating or plating consisting mainly of aluminum and zinc, and the like.

As resistance spot welding applied to a sheet combination of an overlapped plurality of steel sheets including such a coated or plated steel sheet, an example is described in Patent Literature (PTL) 1:

"in spot welding of high strength coated or plated steel sheets, a high strength coated or plated steel sheet spot welding method in which the weld time and the hold time after welding current are set to satisfy the following conditions (1) and (2) to perform spot welding,

$$0.25 \cdot (10 \cdot t + 2) / 50 \leq WT \leq 0.50 \cdot (10 \cdot t + 2) / 50 \qquad \ldots(1)$$

$$300 - 500 \cdot t + 250 \cdot t^2 \leq HT \qquad \ldots(2)$$

where t is sheet thickness (mm), WT is weld time (ms), and HT is hold time (ms) after welding current."

PTL 2 describes:

"in spot welding of high tensile strength galvanized steel sheets by multi-stage current having three or more stages, a high tensile strength galvanized steel sheet spot welding method in which welding conditions are adjusted so that the nugget formed is greater than or equal to a desired nugget diameter $d_0$ defined by the following expression (1) and a remaining thickness other than the nugget is 0.05 mm or more,

$$d_0 = k\sqrt{t} \qquad \ldots(1)$$

where $d_0$ is the desired nugget diameter (mm),
k is a coefficient; a coefficient selected from 3 to 6 according to work conditions, and
t is steel sheet thickness (mm)."

PTL 3 describes:

"a spot welding method of spot welding a plurality of overlapped steel sheets by squeezing between opposed welding electrodes, the plurality of overlapped steel sheets including one or more steel sheets coated with a coating at the welding point on at least one surface, the method comprising
a process of removing the coating prior to spot welding,
wherein, in the process of removing the coating, a range where the coating is removed is at least an area that has an outer circumference in a circle that includes the outer edge of the heat-affected zone formed on the welding electrode side of the plurality of overlapped steel sheets."

PTL 4 describes:

"a spot welding method of performing an actual welding process in which a member to be welded consisting of a plurality of steel sheets overlapped at least at the welding point is pressed and has a current passed therethrough by welding electrodes, and further, a current process of performing at least one of pre-current and subsequent-current,
wherein, for at least one of the plurality of steel sheets, at least an overlapping surface at the welding point is coated with a galvanized coating, the total thickness t (mm) of the plurality of steel sheets is 1.35 mm or more,
the pressure applied to the member to be welded by the welding electrodes is maintained from the start of current passing between the welding electrodes until the end of current passing between the welding electrodes at the end of welding,
and, at the end of welding, a hold time Ht (s) after the end of current passing between the welding electrodes until the welding electrodes and the member to be welded are no longer in contact is within the range of expression (1) below.

$$0.015t^2 + 0.020 \le Ht \le 0.16t^2 - 0.40t + 0.70 \qquad \ldots(1)"$$

PTL 5 describes:

" a resistance spot welding method of squeezing, by a pair of welding electrodes, a sheet combination of a plurality of overlapped steel sheets and passing a current while applying an electrode force to join the sheet combination,
wherein at least one of the plurality of overlapped steel sheets is a surface-treated steel sheet with a metal coating or plating layer on a surface, the resistance spot welding method comprising:

a main current process of passing current to form a nugget;
a no-current process of suspending current after the main current process for a cooling time Tc (cycle); and
a subsequent-current process after the no-current process of passing current that reheats without growing the nugget,
wherein, when the inclined angle of the electrode is A (degrees), the current value of the main current process is Im (kA), the current value of the subsequent-current process is Ip (kA), $1 + 0.1 \cdot Tc$ is a variable B, and $1 + 0.2 \cdot Tc$ is a variable C, the current satisfies the relationships in the following Expression (I),

Expression (I)
when $0 < A < 3$, $(22 + A) \cdot B/100 < Ip/Im < C$
when $3 \le A < 7$, $(17 + A) \cdot B/80 < Ip/Im < C$
when $7 \le A < 15$, $(11 + A) \cdot B/60 < Ip/Im < C"$

CITATION LIST

Patent Literature

PTL 1: JP 2003-103377 A
PTL 2: JP 2003-236676 A
PTL 3: WO 2016/159169 A1
PTL 4: JP 2017-047476 A

PTL 5: WO 2018/159764 A1

Further, patent documents JP 2020-127958 A, WO 2019/124464 A1 and EP 3278917 A1 disclose resistance spot welded joints comprising a sheet combination of overlapped steel sheets and a nugget joining the ssteel sheets.

SUMMARY

(Technical Problem)

In resistance spot welding applied to a coated or plated steel sheet, in particular applied to a sheet combination consisting of a plurality of overlapped steel sheets including a galvanized steel sheet (hereinafter also referred to as resistance spot welding of a galvanized steel sheet), there is a problem that cracks easily occur in the welded portion.
Typically, the melting point of zinc or zinc alloy coating or plating is lower than that of base metal. Therefore, in resistance spot welding of a galvanized steel sheet, the metal coating or plating layer with a low melting point on the steel sheet surface melts during welding. When tensile stress due to the electrode pressing force and thermal expansion and contraction of the steel sheet is applied to the welded portion, the molten low-melting-point metal penetrates into crystal grain boundaries of the base metal of the galvanized steel sheet, decreasing grain boundary strength and causing cracking. That is, most cracks in the welded portion that occur in resistance spot welding of a galvanized steel sheet are considered to be cracks caused by liquid metal embrittlement (hereinafter also referred to as liquid metal embrittlement cracks).
Such liquid metal embrittlement cracks are likely to occur when the welded portion is subjected to a large deformation. For example, when welding under conditions that cause expulsion (splashing), cracks are likely to occur on a surface of sheet combination 2 in contact with welding electrodes 3, 4, as illustrated in FIG. 1. In particular, a crack that occurs at a shoulder of a sheet combination surface, which is a periphery of a contact area between a welding electrode and a sheet combination (hereinafter also referred to as a shoulder crack), occurs from lower welding current values than a crack that occurs directly under an electrode.
On one hand, from the viewpoint of securing joint strength, securing a nugget of a defined size or larger is important. However, the larger the thickness ratio of an outermost steel sheet in a sheet combination (hereinafter also referred to as a surface layer steel sheet; in contact with an electrode during welding), the more difficult it becomes to secure a nugget diameter of a desired size between the surface layer steel sheet and a steel sheet adjacent to the surface layer steel sheet. Here, the thickness ratio of the surface layer steel sheet is a value obtained by dividing the total thickness of steel sheets of the sheet combination by the thickness of the surface layer steel sheet. Further, in implementation during automobile assembly, disturbances may occur during welding. For example, there may be a gap between a fixed welding electrode and a sheet combination, or between steel sheets of a sheet combination. In such cases, it also becomes difficult to secure a nugget diameter of the desired size.
In this regard, nugget diameter can be increased by setting a larger current value during welding. However, when the current value during welding is set to a large value, then, for example, there is an increased risk of expulsion causing large deformation of a welded portion, which increases the risk of the welded portion cracking, in particular increasing the risk of liquid metal embrittlement cracking, as typified by shoulder cracking.
The techniques described in PTL 1, 2, 4, and 5 are unable to both suppress the occurrence of cracks in the welded portion and secure a stable nugget diameter of the desired size when a thickness ratio of the surface layer steel sheet is large or a disturbance has a large effect, and improvement in this regard is desired at present. Improvement in this regard is desired not only for steel sheets for automobile use, but also for resistance spot welding of a galvanized steel sheet in other steel sheet applications.
Further, the technique of PTL 3 requires a process to remove the coated or plated layer from the steel sheet surface in advance (hereinafter also referred to as a coated or plated layer removal process), and therefore significantly increases manufacturing costs. Further, the coated or plated layer is removed from the steel sheet, which may lead to a decrease in corrosion resistance of the welded portion.
The present invention was developed in view of the current situation described above, and it would be helpful to provide a welded joint for which cracking of the welded portion is suppressed and nugget diameter is a desired size, even when at least one of the surface layer steel sheets of a sheet combination is a galvanized steel sheet and the thickness ratio of a surface layer steel sheet is large or a disturbance has a large effect.
Further, it would be helpful to provide a resistance spot welding method for resistance spot welding of a galvanized steel sheet that does not require a coated or plated layer removal process and that can both suppress cracking of the welded portion and secure a stable nugget diameter of a desired size, even when the thickness ratio of a surface layer steel sheet is large or a disturbance has a large effect.
Further, it would be helpful to provide a welded member including the welded joint and a method of producing same.

(Solution to Problem)

The inventors engaged in extensive studies and made the following discoveries.

The presence or absence of welded portion cracking, in particular shoulder cracking, in resistance spot welding of a galvanized steel sheet, is strongly influenced by deformation at the shoulder of a sheet combination that occurs during welding, that is, a shoulder indentation ratio b/T. The shoulder indentation ratio b/T is appropriately controlled in relation to the tensile strength and thickness of the galvanized steel sheet arranged as the surface layer steel sheet of a sheet combination (the outermost steel sheet in the sheet combination (in contact with the electrode during welding)), and the total thickness of the steel sheets of the sheet combination. Specifically, at least one of Expression (1) or Expression (2) below is satisfied. This effectively suppresses the occurrence of cracking of the welded portion.

Here, the shoulder indentation ratio b/T is the value obtained by dividing the shoulder indentation amount b (mm) by the total thickness T (mm) of the steel sheets of the sheet combination. Further, the shoulder indentation amount b (mm) is the value obtained by subtracting the minimum thickness a (mm) of the sheet combination at a distance of 1 mm from the nugget end from the total thickness T (mm) of the steel sheets of the sheet combination.

Further, expulsion is one of the causes of deformation of the shoulder of the sheet combination that occurs during welding. By controlling the occurrence of expulsion (the amount of spattered molten metal), cracking of the welded portion can be suppressed. Based on this point, the inventors conducted further studies to obtain a resistance spot welding method that can both suppress cracking of the welded portion and secure a stable nugget diameter of the desired size, even when the thickness ratio of the surface layer steel sheet is large or a disturbance has a large effect.

As a result, the inventors found that it is effective to simultaneously satisfy the following (a) to (c).

(a) The current passing process during welding is divided into two processes: a first current process and a second current process.
(b) In the first current process, the amount of heat input is controlled by adjusting the current pattern to form a nugget while minimizing large deformation at the shoulders of the sheet combination.
(c) In the second current process, a current pattern of repeated current passing and cooling is used to gradually enlarge the nugget while minimizing large deformation at the shoulders of the sheet combination.

In the first current process, the nugget needs to be formed so that no large deformation occurs at the shoulders of the sheet combination in the second current process, which is a subsequent process. For this purpose, it is important to control the amount of heat input by adjusting the current pattern. In particular, regarding weld time $\alpha$ (ms) of the first current process, it is important to satisfy at least one of Expressions (4) or (5) below, depending on the thickness of the galvanized steel sheet disposed as the surface layer steel sheet of the sheet combination and the total thickness of the steel sheets of the sheet combination. This allows the pressure-welded portion around the nugget (corona bond) to be firmly joined. As a result, even when the thickness ratio of the surface layer steel sheet or a disturbance has a large effect, the amount of spattering expulsion, or excessive indentation, can be suppressed in the first current process while the nugget is enlarged. This makes it possible to suppress deformation of the shoulders of the sheet combination and therefore suppress cracking in the welded portion after the second current process is completed, while achieving the desired nugget diameter.

Further, in the second current process, current greater than or equal to the current value at the end of the first current process can be used to enlarge the nugget. However, when heat input is excessive, large deformation occurs at the shoulders of the sheet combination. Therefore, it is important to use a current pattern that repeats cooling and current passing for at least a certain period of time. Further, regarding a ratio $\beta/\gamma$ of total cooling time $\beta$ to total weld time in the second current process, it is important to satisfy at least one of Expressions (6) or (7) below, depending on the thickness of the galvanized steel sheet disposed as the surface layer steel sheet of the sheet combination and the total thickness of the steel sheets of the sheet combination. These allow the nugget to be enlarged gradually while minimizing large deformation at the shoulders of the sheet combination. The pressure-welded portion (corona bond) around the nugget is firmly joined in the first current process. Further, during the cooling in the second current process and the subsequent heating due to current passage, the pressure-welded portion around the nugget (corona bond) is more firmly joined. Therefore, even when expulsion occurs, the amount of expulsion (the amount of molten metal spattered) can be suppressed. As a result, deformation of the shoulders of the sheet combination is suppressed, and consequently cracking of the welded portion is suppressed.

In addition, the second current process enlarges the nugget as described above, and therefore the nugget is in a molten state at the end of the second current process. Therefore, when releasing the electrode from the sheet combination immediately after the second current passage process, cracks may occur from the nugget end or corona bond end between steel sheets of the sheet combination toward the inside of the nugget, resulting in a decrease in joint quality. Such cracks are more pronounced in a sheet combination of material to be joined where a boundary between the steel sheets of the sheet combination is located away from the center position (1/2 thickness position of the sheet combination) of the overall sheet combination thickness (total thickness of the steel sheets of the sheet combination). Examples of such sheet combinations include sheet combinations that consist of two steel sheets of different thicknesses stacked on top of each other, and sheet combinations that consist of three or more steel sheets stacked on top of each other, regardless of their thickness. The inventors have also studied this point and found that the crack initiation described above can be effectively prevented regardless of sheet combination by providing a pressure hold process in which pressure is held in a no-current state after the second current process and by setting the pressure hold time to 10 ms or more in the pressure hold process.

The present invention is based on these discoveries and further studies.

Primary features of the present invention are as follows.

1. A welded joint comprising a sheet combination of n overlapped steel sheets and a nugget joining the steel sheets, wherein

n is an integer greater than or equal to 2,
in the sheet combination, at least one of the first steel sheet or the nth steel sheet in order from the top is a galvanized steel sheet,
an indentation ratio b/T of shoulders of the sheet combination satisfies,
in the case of [Condition 1], the following Expression (1),
in the case of [Condition 2], the following Expression (2),
in the case of [Condition 3], Expressions (1) and (2),
in the sheet combination, nugget diameter $x_k$, in mm, at each boundary level between a kth steel sheet and a (k+1) th steel sheet is $3.5\sqrt{t_k}$ or more, k is an integer from 1 to n-1, $t_k$ is the thickness in mm of the thinner of the kth steel sheet and the (k+1)th steel sheet,

$$b/T \leq 0.6/(T/t_U)^{0.5} \times (980/S_U)^{0.5} \qquad ...(1)$$

$$b/T \leq 0.6/(T/t_L)^{0.5} \times (980/S_L)^{0.5} \qquad ...(2)$$

where
b is shoulder indentation in mm,
T is total thickness in mm of the n steel sheets,
tu is thickness in mm of the first steel sheet,
$t_L$ is thickness in mm of the nth steel sheet,
Su is tensile strength in MPa of the first steel sheet,
$S_L$ is tensile strength in MPa of the nth steel sheet,
the shoulder indentation b is determined by the following Expression (3),

$$b = T - a \qquad ...(3)$$

where
a is minimum thickness in mm of the sheet combination at a distance of 1 mm from a nugget end,
and [Condition 1] to [Condition 3] are as follows:

[Condition 1]
of the first steel sheet and the nth steel sheet of the sheet combination, only the first steel sheet is a galvanized steel sheet,
[Condition 2]
of the first steel sheet and the nth steel sheet of the sheet combination, only the nth steel sheet is a galvanized steel sheet,
[Condition 3]
of the first steel sheet and the nth steel sheet of the sheet combination, both the first steel sheet and the nth steel sheet are galvanized steel sheets.

2. A welded member comprising the welded joint according to 1, above.

3. A resistance spot welding method of squeezing, by a pair of welding electrodes, a sheet combination of n overlapped steel sheets and passing a current while applying an electrode force to join the sheet combination, wherein

n is an integer greater than or equal to 2,

in the sheet combination, at least one of the first steel sheet or the nth steel sheet in order from the top is a galvanized steel sheet,
the resistance spot welding method comprising:

a first current process of forming a nugget;
a second current process of enlarging the nugget formed in the first current passage process; and
after the second current process, a pressure hold process of holding pressure on the sheet combination in a no-current state,
wherein,
in the first current process, current is passed for a weld time of $\alpha$ ms,
the weld time $\alpha$, in ms, satisfies,
in the case of [Condition 1], the following Expression (4),
in the case of [Condition 2], the following Expression (5),
in the case of [Condition 3], Expressions (4) and (5),
the second current process comprises:

cooling where no current is passed for a cooling time of 10 ms or more; and
current passing for a weld time of 15 ms or more with a current value greater than or equal to a current value of the first current process, the cooling and the current passing each being carried out at least once, wherein
a ratio $\beta/\gamma$ of total cooling time $\beta$ to total weld time $\gamma$ in the second current process satisfies,
in the case of [Condition 1], Expression (6),
in the case of [Condition 2], Expression (7),
in the case of [Condition 3], Expressions (6) and (7),
in the pressure hold process, the pressure hold time is 10 ms or more,

$$\alpha \geq 50 \times (T/t_U)^{0.5} \qquad \ldots (4)$$

$$\alpha \geq 50 \times (T/t_L)^{0.5} \qquad \ldots (5)$$

$$0.10 \times (T/t_U)^{0.5} \leq \beta/\gamma \leq 2 \times (T/t_U)^{0.5} \qquad \ldots (6)$$

$$0.10 \times (T/t_L)^{0.5} \leq \beta/\gamma \leq 2 \times (T/t_L)^{0.5} \qquad \ldots (7)$$

where
T is total thickness in mm of the n steel sheets,
tu is thickness in mm of the first steel sheet,
$t_L$ is thickness in mm of the nth steel sheet,
and [Condition 1] to [Condition 3] are as follows:

[Condition 1]
of the first steel sheet and the nth steel sheet of the sheet combination, only the first steel sheet is a galvanized steel sheet,
[Condition 2]
of the first steel sheet and the nth steel sheet of the sheet combination, only the nth steel sheet is a galvanized steel sheet,
[Condition 3]
of the first steel sheet and the nth steel sheet of the sheet combination, both the first steel sheet and the nth steel sheet are galvanized steel sheets.

4. The resistance spot welding method according to 3, above, satisfying one or more of the following conditions (A) to (E),

(A) a welding electrode has an inclined angle relative to the sheet combination,
(B) the pair of welding electrodes are off-center,

(C) before pressing the sheet combination, there is a gap between the fixed welding electrode and the sheet combination,

(D) before pressing the sheet combination, there is at least one gap between the steel sheets of the sheet combination, and

(E) on the surface of the sheet combination, the shortest distance from the center of the welding contact point to an end face of the sheet combination is 10 mm or less.

5. A method of producing a welded member, comprising a process of joining a sheet combination of n overlapped steel sheets by the resistance spot welding method according to 3 or 4, above, wherein n is an integer greater than or equal to 2.

(Advantageous Effect)

According to the present invention, a welded joint is obtainable for which cracking of the welded portion is suppressed and nugget diameter is a desired size, even when at least one of the surface layer steel sheets of a sheet combination is a galvanized steel sheet and the thickness ratio of a surface layer steel sheet is large or a disturbance has a large effect. Further, a welded member including the welded joint of the present invention includes a galvanized steel sheet having high corrosion resistance disposed outermost, and is therefore extremely suitable for application to automotive parts and the like, in particular automotive parts used in locations that are exposed to rainwater.

BRIEF DESCRIPTION OF THE DRAWINGS

In the accompanying drawings:

FIG. 1 is a diagram schematically illustrating an example resistance spot welding method;
FIG. 2 is a diagram schematically illustrating an example of a welded joint cross-section; and
FIG. 3 is a diagram schematically illustrating an example of a sheet combination that has a sheet gap.

DETAILED DESCRIPTION

The following describes embodiments of the present invention. First, a welded joint according to an embodiment of the present invention is described.

[1] Welded joint

The welded joint according to an embodiment of the present invention is

a welded joint comprising a sheet combination of n overlapped steel sheets and a nugget joining the steel sheets, wherein
n is an integer greater than or equal to 2,
in the sheet combination, at least one of the first steel sheet or the nth steel sheet in order from the top is a galvanized steel sheet,
an indentation ratio b/T of shoulders of the sheet combination satisfies,
in the case of [Condition 1], the following Expression (1),
in the case of [Condition 2], the following Expression (2),
in the case of [Condition 3], Expressions (1) and (2),
in the sheet combination, nugget diameter $x_k$, in mm, at each boundary level between a kth steel sheet and a (k+1)th steel sheet is $3.5\sqrt{t_k}$ or more, k is an integer from 1 to n-1, and $t_k$ is the thickness in mm of the thinner of the kth steel sheet and the (k+1)th steel sheet.

$$b/T \leq 0.6/(T/t_U)^{0.5} \times (980/S_U)^{0.5} \qquad \ldots(1)$$

$$b/T \leq 0.6/(T/t_L)^{0.5} \times (980/S_L)^{0.5} \qquad \ldots(2)$$

Here,

b is shoulder indentation in mm,

T is total thickness in mm of the n steel sheets,
tu is thickness in mm of the first steel sheet,
$t_L$ is thickness in mm of the nth steel sheet,
Su is tensile strength in MPa of the first steel sheet, and
$S_L$ is tensile strength in MPa of the nth steel sheet.

Further, the shoulder indentation b is determined by the following Expression (3).

$$b = T - a \qquad \qquad ...(3)$$

Here,
a is minimum thickness in mm of the sheet combination at a distance of 1 mm from a nugget end.
In addition, [Condition 1] to [Condition 3] are as follows.

[Condition 1]

Of the first steel sheet and the nth steel sheet of the sheet combination, only the first steel sheet is a galvanized steel sheet.

[Condition 2]

Of the first steel sheet and the nth steel sheet of the sheet combination, only the nth steel sheet is a galvanized steel sheet.

[Condition 3]

Of the first steel sheet and the nth steel sheet of the sheet combination, both the first steel sheet and the nth steel sheet are galvanized steel sheets.
Here, the sheet combination is n steel sheets stacked on top of each other, and at least one of the first steel sheet and the nth steel sheet in order from the top, that is, at least one of the surface layer steel sheets of the sheet combination, is a galvanized steel sheet. The order from the top here is, for example, the order from the top in the vertical direction when the sheet combination is arranged so that surfaces of the sheet combination are parallel to the horizontal plane.
Further, a galvanized steel sheet is a steel sheet that has a zinc or zinc alloy coated or plated layer on one or both surfaces of the base steel sheet, such as a hot-dip galvanized steel sheet or a galvannealed steel sheet. When a steel sheet with a zinc or zinc alloy coated or plated layer on one surface of the base steel sheet is used as the first steel sheet or the nth steel sheet, the zinc or zinc alloy coated or plated layer is preferably outermost in the sheet combination. Here, the zinc or zinc alloy coated or plated layer is a coated or plated layer having a zinc content of 1 mass% or more. The zinc content is preferably 30 % or more. The term zinc or zinc alloy coated or plated layer includes, for example, a hot-dip galvanized layer, a galvannealed layer, an electrogalvanized layer, as well as a zinc alloy coated or plated layer containing a total of less than 50 mass% of alloying elements such as aluminum, magnesium, silicon, nickel, and iron. Further, as (a steel sheet including) a zinc alloy coated or plated layer, examples include Galfan (Zn - 5 mass% Al) and Ecogal® (Ecogal is a registered trademark in Japan, other countries, or both) (Zn - 5 mass% Al - 1 mass% or less Mg and Ni). Further, as a zinc alloy coated or plated layer, examples include an aluminum-zinc alloy coated or plated layer that contains a total of 67 mass% or more of aluminum and zinc and less than 33 mass% of alloying elements such as magnesium, silicon, nickel, and iron (for example, Galvalume (55 mass% Al - 43.4 mass% Zn - 1.6 mass% Si), and the like). The zinc or zinc alloy coated or plated layer preferably has a melting point lower than that of the base steel sheet. Further, the balance other than the zinc and alloying elements described above is inevitable impurity. Further, there is no particular limitation for the base steel sheet. For example, steel sheets having various strengths can be applied, from mild steel having 270 MPa grade tensile strength (hereinafter also referred to as TS) to a steel sheet having 490 MPa grade to 2500 MPa grade TS.
In addition, a galvanized steel sheet as described above may be used for a steel sheet other than the first steel sheet and the nth steel sheet out of the steel sheets of the sheet combination. Further, a steel sheet without coating or plating may be used. For example, steel sheets having various strengths may be used, from mild steel having 270 MPa grade TS to a steel sheet having 490 MPa grade to 2500 MPa grade TS. When the first steel sheet is a galvanized steel sheet, the nth steel sheet may be a galvanized steel sheet as described above, or a steel sheet without coating or plating as described above. The same is true for the first steel sheet when the nth steel sheet is a galvanized steel sheet.
The thickness of each of the steel sheets of the sheet combination is not particularly limited. For example, thickness is preferably 0.4 mm or more. Thickness is preferably 3.2 mm or less. Steel sheets having a thickness of 0.4 mm or more to 3.2 mm or less are suitable for use as members for automobiles.

Further, the number of overlapped steel sheets in a sheet combination, n, is an integer greater than or equal to 2. An upper limit of n is not particularly limited. For example, n is preferably 7 or less.

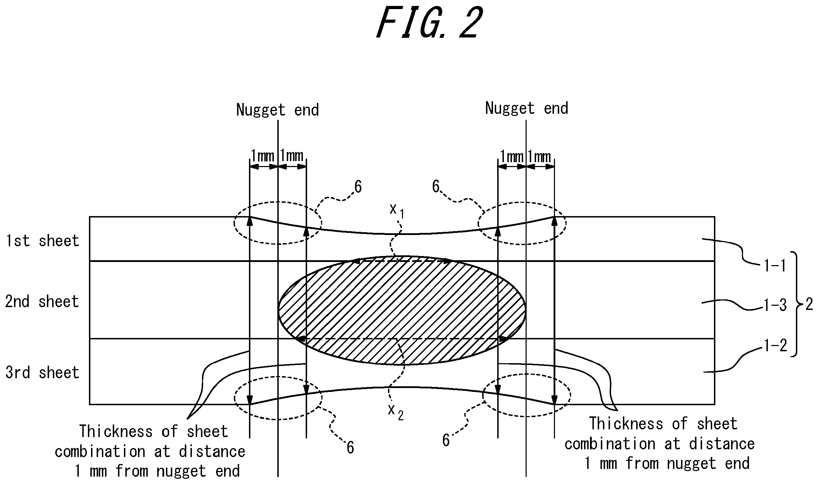

In the welded joint according to an embodiment of the present invention, it is important to satisfy at least one of Expressions (1) or (2) for the shoulder indentation ratio b/T, depending on [Condition 1] to [Condition 3]. Here, shoulder refers to a shoulder at an indentation on the surface (front and back) of the sheet combination, as illustrated in FIG. 2. In the drawing, reference signs 1-1 to 1-3 indicate steel sheets and 6 indicates a shoulder. Further, the indentations on the surfaces of the sheet combination (front and back surfaces) are welding electrode marks caused by the pressure applied by the welding electrodes during welding, and the nugget is located between the indentations.

Shoulder indentation ratio b/T: satisfy at least one of Expressions (1) or (2), depending on [Condition 1] to [Condition 3].

As mentioned above, the presence or absence of welded portion cracking, in particular shoulder cracking, in resistance spot welding of a galvanized steel sheet, is strongly influenced by deformation at the shoulder of a sheet combination that occurs during welding, that is, the shoulder indentation ratio b/T. By appropriately controlling the shoulder indentation ratio b/T in relation to the tensile strength and thickness of a galvanized steel sheet arranged as the surface layer steel sheet of a sheet combination, and the total thickness of the steel sheets of the sheet combination, occurrence of welded portion cracking can be effectively suppressed.

Specifically, occurrence of welded portion cracking can be effectively suppressed by satisfying,

in the case of [Condition 1], the following Expression (1),
in the case of [Condition 2], the following Expression (2),
in the case of [Condition 3], Expressions (1) and (2).

$$b/T \leq 0.6/(T/t_U)^{0.5} \times (980/S_U)^{0.5} \qquad \ldots(1)$$

$$b/T \leq 0.6/(T/t_L)^{0.5} \times (980/S_L)^{0.5} \qquad \ldots(2)$$

Here,

b is shoulder indentation in mm,
T is total thickness in mm of the n steel sheets,
$t_U$ is thickness in mm of the first steel sheet,
$t_L$ is thickness in mm of the nth steel sheet,
$S_U$ is tensile strength in MPa of the first steel sheet, and
$S_L$ is tensile strength in MPa of the nth steel sheet.

Further, the shoulder indentation b is determined by the following Expression (3).

$$b = T - a \qquad \ldots(3)$$

Here,
a is minimum thickness in mm of the sheet combination at a distance of 1 mm from a nugget end.

In addition, [Condition 1] to [Condition 3] are as follows.

[Condition 1]

Of the first steel sheet and the nth steel sheet of the sheet combination, only the first steel sheet is a galvanized steel sheet.

[Condition 2]

Of the first steel sheet and the nth steel sheet of the sheet combination, only the nth steel sheet is a galvanized steel sheet.

[Condition 3]

Of the first steel sheet and the nth steel sheet of the sheet combination, both the first steel sheet and the nth steel sheet are galvanized steel sheets.

Here, the minimum thickness of the sheet combination at a distance of 1 mm from the nugget end is measured as follows.

The welded joint is cut perpendicular to the surface of the sheet combination so as to pass through the center of the nugget. On the cross-section, as illustrated in FIG. 2, the thickness of the sheet combination is measured at a distance of 1 mm from the nugget end (the end in a direction perpendicular to the thickness direction of the sheet combination), and the minimum thickness is a (mm). The measurement of nugget diameter, described below, is also performed on the cross-section.

The shoulder indentation ratio b/T in Expression (1) is preferably $b/T \leq 0.4/(T/t_U)^{0.5} \times (980/S_U)^{0.5}$. The shoulder indentation ratio b/T in Expression (2) is preferably $b/T \leq 0.4/(T/t_L)^{0.5} \times (980/S_L)^{0.5}$. A lower limit of the shoulder indentation ratio b/T is not particularly limited and may be 0.

Further, as mentioned above, in a sheet combination of material to be joined where a boundary between steel sheets of the sheet combination is located away from the center position of the thickness of the entire sheet combination (1/2 thickness position of the sheet combination), that is, in a sheet combination where T/tu or $T/t_L$ is large, cracks are likely to occur from the nugget end or corona bond end between steel sheets of the sheet combination toward the inside of the nugget. Therefore, regarding T/tu and $T/t_L$, the occurrence of such cracks is preferably suppressed in a sheet combination that satisfies at least one of the following Expressions (8) or (9). Further, the occurrence of such cracks is more preferably suppressed in a sheet combination that satisfies at least one of the following Expressions (10) or (11).

$$T/t_U > 2 \qquad ...(8)$$

$$T/t_L > 2 \qquad ...(9)$$

$$T/t_U > 3 \qquad ...(10)$$

$$T/t_L > 3 \qquad ...(11)$$

Nugget diameter $x_k$ (mm) at boundary level between kth steel sheet and (k+1)th steel sheet: $3.5\sqrt{t_k}$ or more
From the viewpoint of ensuring joint strength, the nugget diameter $x_k$ (mm) at each boundary level between the kth steel sheet and the (k+1)th steel sheet is $3.5\sqrt{t_k}$ or more. The nugget diameter $x_k$ is preferably $4.0\sqrt{t_k}$ or more. An upper limit of the nugget diameter $x_k$ is not particularly limited. From the viewpoint of suppressing expulsion, the nugget diameter $x_k$ is preferably $10.0\sqrt{t_k}$ or less. Here, k is an integer from 1 to n-1 and $t_k$ is the thickness (mm) of the kth steel sheet or the (k+1)th steel sheet, whichever is thinner. The nugget is a point-like welded portion that joins the steel sheets of a sheet combination. Further, the nugget is a portion of the sheet combination where the steel sheets have melted and solidified.

[2] Welded member

The welded member according to an embodiment of the present invention is a welded member including the welded joint described above. The welded member according to an embodiment of the present invention includes a galvanized steel sheet having high corrosion resistance disposed outermost, and is therefore suitable for application to automotive parts and the like, in particular automotive parts used in locations that are exposed to rainwater. The welded member according to an embodiment of the present invention may further include another welded joint (welded portion) in addition to the welded joint described above.

[3] Resistance spot welding method

The resistance spot welding method according to an embodiment of the present invention is

a resistance spot welding method of squeezing, by a pair of welding electrodes, a sheet combination of n overlapped steel sheets and passing a current while applying an electrode force to join the sheet combination, wherein
n is an integer greater than or equal to 2,
in the sheet combination, at least one of the first steel sheet or the nth steel sheet in order from the top is a galvanized steel sheet,
the resistance spot welding method comprising:

a first current process of forming a nugget;
a second current process of enlarging the nugget formed in the first current passage process; and
after the second current process, a pressure hold process of holding pressure on the sheet combination in a no-current state,
wherein,
in the first current process, current is passed for a weld time of $\alpha$ ms,
the weld time $\alpha$, in ms, satisfies,
in the case of [Condition 1], the following Expression (4),
in the case of [Condition 2], the following Expression (5),
in the case of [Condition 3], Expressions (4) and (5),
the second current process comprises:

cooling where no current is passed for a cooling time of 10 ms or more; and
current passing for a weld time of 15 ms or more with a current value greater than or equal to a current value of the first current process, the cooling and the current passing each being carried out at least once, wherein a ratio $\beta/\gamma$ of total cooling time $\beta$ to total weld time $\gamma$ in the second current process satisfies,
in the case of [Condition 1], Expression (6),
in the case of [Condition 2], Expression (7),
in the case of [Condition 3], Expressions (6) and (7),
and, in the pressure hold process, the pressure hold time is 10 ms or more.

$$\alpha \geq 50 \times (T/t_U)^{0.5} \qquad \ldots(4)$$

$$\alpha \geq 50 \times (T/t_L)^{0.5} \qquad \ldots(5)$$

$$0.10 \times (T/t_U)^{0.5} \leq \beta/\gamma \leq 2 \times (T/t_U)^{0.5} \qquad \ldots(6)$$

$$0.10 \times (T/t_L)^{0.5} \leq \beta/\gamma \leq 2 \times (T/t_L)^{0.5} \qquad \ldots(7)$$

Here,

T is total thickness in mm of the n steel sheets,
tu is thickness in mm of the first steel sheet, and
$t_L$ is thickness in mm of the nth steel sheet.

Further, [Condition 1] to [Condition 3] are as follows.

[Condition 1]

Of the first steel sheet and the nth steel sheet of the sheet combination, only the first steel sheet is a galvanized steel sheet.

[Condition 2]

Of the first steel sheet and the nth steel sheet of the sheet combination, only the nth steel sheet is a galvanized steel sheet.

[Condition 3]

Of the first steel sheet and the nth steel sheet of the sheet combination, both the first steel sheet and the nth steel sheet are galvanized steel sheets.
For example, as illustrated in FIG. 1, the pair of welding electrodes 3, 4 (the upper electrode 3 and the lower electrode 4) squeeze the sheet combination 2 of the overlapped steel sheets 1-1, 1-2 (also referred to as the upper steel sheet 1-1 and the lower steel sheet 1-2). Pressure is applied by the welding electrodes 3, 4 from above and below while a welding current is passed between the welding electrodes 3, 4 to join the sheet combination 2. Any welding device that includes a pair of upper and lower welding electrodes and is capable of freely controlling each of the electrode force and the welding current during welding may be used in the resistance spot welding method according to an embodiment of the present invention. Type (stationary, robot gun, and the like), electrode shape, and the like are not particularly limited. Further, a configuration for adding and controlling electrode force is not particularly limited, and a conventionally known device such as an air cylinder, a servo motor, and the like may be used. Further, a configuration for supplying current and controlling the current value during current passing is not particularly limited, and any conventionally known device may be used. Further, the current during current passing may be direct current or alternating current. In the case of alternating current, "current" means "effective current". Further, type of tip of the upper electrode 3 and the lower electrode 4 is also not particularly limited. Examples include a dome-radius (DR) type, radius (R) type, dome (D) type, and the like, as described in Japanese Industrial Standard JIS C 9304:1999. Further, tip diameter of each electrode is, for example, 4 mm to 16 mm.

In the resistance spot welding method according to an embodiment of the present invention the current process during welding is divided into two processes, the first current process and the second current process, as described above. In the first current process, the amount of heat input is controlled by adjusting the current pattern to form the nugget while minimizing large deformation at the shoulders of the sheet combination. In the second current process, a current pattern of repeated current passing and cooling is used to gradually enlarge the nugget while minimizing large deformation at the shoulders of the sheet combination.

The first current process and the second current process are described below. The description of the sheet combination used in the resistance spot welding method according to an embodiment of the present invention is the same as the description of the sheet combination under [1] Welded joint, and is therefore omitted here.

• First current process

In the first current process, the nugget needs to be formed so that no large deformation occurs at the shoulders of the sheet combination in the second current process, which is a subsequent process. For this purpose, it is important to control the amount of heat input by adjusting the current pattern, and in particular, to appropriately control the weld time.

Weld time $\alpha$ (ms): at least one of Expressions (4) or (5) is satisfied, depending on [Condition 1] to [Condition 3].

As mentioned above, in the first current process, the amount of heat input is controlled by adjusting the current pattern. In particular, regarding weld time $\alpha$ (ms), at least one of Expressions (4) or (5) is satisfied, depending on the thickness of the galvanized steel sheet disposed as the surface layer steel sheet of the sheet combination and the total thickness of the steel sheets of the sheet combination. This firmly joins the pressure-welded portion (corona bond) around the nugget. As a result, even when the thickness ratio of the surface layer steel sheet or a disturbance has a large effect, the amount of spattering expulsion, or excessive indentation, can be suppressed in the first current process while the nugget is enlarged. This makes it possible to suppress deformation of the shoulders of the sheet combination and therefore suppress cracking in the welded portion after the second current process is completed, while achieving the desired nugget diameter.

$$\alpha \geq 50 \times (T/t_U)^{0.5} \qquad \qquad ...(4)$$

$$\alpha \geq 50 \times (T/t_L)^{0.5} \qquad \qquad ...(5)$$

Here,

T is total thickness in mm of the n steel sheets,
tu is thickness in mm of the first steel sheet, and
$t_L$ is thickness in mm of the nth steel sheet.

Further, [Condition 1] to [Condition 3] are as described above.

The weld time $\alpha$ (ms) in Expression (4) is preferably $\alpha \geq 70 \times (T/t_U)^{0.5}$. The weld time $\alpha$ (ms) in Expression (5) is preferably $\alpha \geq 70 \times (T/t_L)^{0.5}$. An upper limit of the weld time $\alpha$ (ms) is not particularly limited. From the viewpoint of production efficiency, the weld time $\alpha$ is preferably 1000 ms or less.

Conditions other than those described above are not particularly limited, and a conventional method may be used. For example, the current value for the first current process (hereinafter also simply referred to as I1) may be 2.0 kA to 15.0 kA, and the electrode force may be 1.5 kN to 10.0 kN. In the first current process, use of upslope current is preferred. For example, when the current value at the start of current passing is Is (kA) and the current value at the end of current passing is If (kA), the following Expression (12) is preferably satisfied. This allows the effect of firmly joining the pressure-welded portion (corona bond) around the nugget and the effect of forming a large nugget while suppressing deformation in the first current process to be more effectively obtained.

$$If > Is \qquad \ldots(12)$$

Is is preferably 2.0 kA to 14.0 kA. If is preferably 3.0 kA to 15.0 kA.

Further, when the current value changes during current passing, the maximum current value in the first current process (that is, the current value at the end of current passing when upslope current is used, as described above) is considered as I1 (current value in the first current process).

• Second current process

In the second current process, a current pattern of repeated cooling and current passing is used to gradually enlarge the nugget while minimizing large deformation at the shoulders of the sheet combination.

Cooling in the no-current state for cooling time: 10 ms or more, and current passing for weld time: 15 ms or more at current value: I1 or more, each at least once

As mentioned above, in the second current process, it is necessary to enlarge the nugget gradually while minimizing large deformation at the shoulders of the sheet combination. Therefore, in the second current process, the current pattern repeats cooling and current passing. In particular, cooling is performed for a cooling time of 10 ms or more, and current is passed for a weld time of 15 ms or more at a current value of I1 or more, each at least once. From the viewpoint of more advantageously obtaining the effects described above, the number of cycles of cooling and current passing is preferably two or more. When the number of cycles of cooling and current passing exceeds ten, the effects described above may become saturated, while at the same time, production efficiency may decrease. Therefore, the number of cycles of cooling and current passing is preferably ten or less.

Further, in the cooling, when the cooling time per cycle is less than 10 ms, the cooling effect is not sufficient and large deformation is likely to occur at the shoulders of the sheet combination, making cracking of the welded portion more likely. Therefore, the cooling time per cycle is 10 ms or more. From the viewpoint of enlarging the nugget gradually while more advantageously suppressing large deformation at the shoulders of the sheet combination, the cooling time per cycle is preferably 15 ms or more. An upper limit of the cooling time per cycle is not particularly limited. From the viewpoint of production efficiency, the cooling time per cycle is preferably 300 ms or less. Cooling is performed as a no-current state, and non-welding time is the cooling time.

Further, in the current passing, when the weld time per cycle is less than 15 ms, the nugget cannot be sufficiently enlarged in the second current process due to insufficient heat input. Therefore, the weld time per cycle is 15 ms or more. From the viewpoint of enlarging the nugget gradually while more advantageously suppressing large deformation at the shoulders of the sheet combination, the weld time per cycle is preferably 20 ms or more. An upper limit of the weld time per cycle is not particularly limited. From the viewpoint of suppressing expulsion, the weld time per cycle is preferably 300 ms or less.

In addition, in the current passing described above, the current value needs to be I1 or more, that is, greater than or equal to the current value of the first current process, in order to enlarge the nugget gradually. The current value in the current passing described above is preferably $1.1 \times I1$ or more. An upper limit of the current value in the current passing described above is not particularly limited. From the viewpoint of suppressing the occurrence of expulsion, the current value in the current passing described above is preferably 20 kA or less.

The cooling time per cycle in the cooling may be the same or different for each cooling cycle, as long as the cooling time is 10 ms or more. The same applies to the weld time and current value in the current passing described above.

Ratio $\beta/\gamma$ of the total cooling time $\beta$ to the total weld time $\gamma$: at least one of Expressions (6) or (7) is satisfied, depending on [Condition 1] to [Condition 3].

In the resistance spot welding method according to an embodiment of the present invention, it is extremely important that the ratio $\beta/\gamma$ of the total cooling time $\beta$ to the total weld time $\gamma$ in the second current process satisfies,

in the case of [Condition 1], Expression (6),
in the case of [Condition 2], Expression (7), or
in the case of [Condition 3], Expressions (6) and (7).

As a result, even when expulsion occurs in the second current process, the pressure-welded portion around the nugget (corona bond) is more firmly joined during cooling in the second current process and subsequent heating due to current passage. Therefore, the amount of expulsion (the amount of molten metal spattered) can be suppressed. As a result, it is possible to achieve a nugget diameter of the desired size, specifically, the nugget diameter $x_k$ at each boundary level between the kth steel sheet and the (k+1)th steel sheet of $3.5\sqrt{t_k}$ or more, while suppressing deformation at the shoulders of the sheet combination and thereby suppressing cracking in the welded portion.

$$0.10 \times (T/t_U)^{0.5} \leq \beta/\gamma \leq 2 \times (T/t_U)^{0.5} \qquad ...(6)$$

$$0.10 \times (T/t_L)^{0.5} \leq \beta/\gamma \leq 2 \times (T/t_L)^{0.5} \qquad ...(7)$$

Here,

T is total thickness in mm of the n steel sheets,
tu is thickness in mm of the first steel sheet, and
$t_L$ is thickness in mm of the nth steel sheet.

Further, [Condition 1] to [Condition 3] are as described above.

Here, when $\beta/\gamma$ is too small, the effect of suppressing the amount of expulsion spattering due to cooling is not sufficient, and cracking in the welded portion is not suppressed. On the other hand, when $\beta/\gamma$ is too large, the effect of nugget diameter enlargement due to current passage is not sufficient, and the desired nugget diameter cannot be obtained while suppressing cracking in the welded portion. $\beta/\gamma$ in Expression (6) is preferably $0.14 \times (T/t_U)^{0.5} \leq \beta/\gamma \leq 1.6 \times (T/t_U)^{0.5}$. $\beta/\gamma$ in Expression (7) is preferably $0.14 \times (T/t_L)^{0.5} \leq \beta/\gamma \leq 1.6 \times (T/t_L)^{0.5}$.

In the second current process, as mentioned above, the nugget formed in the first current process needs to be enlarged, and the amount of nugget enlargement is preferably 0.05 mm or more. Here, the amount of nugget enlargement in the second current process is calculated as the maximum value of $x_k - x_k'$. $x_k'$ is the nugget diameter at each boundary level between the kth steel sheet and the (k+1)th steel sheet at the end of the first current process. $x_k'$ can be determined, for example, by separately preparing a sample in which current is passed up to the first current process under the same conditions as the production conditions (welding conditions) of the welded joint, and measuring the nugget diameter at each boundary level between the kth steel sheet and the (k+1)th steel sheet in the sample. The amount of nugget enlargement can be adjusted, for example, by preparing in advance the same sheet combination as the sheet combination to be welded and conducting preliminary welding tests under various conditions within the above welding condition ranges to investigate the amount of nugget enlargement under each condition.

Conditions other than those described above are not particularly limited, and a conventional method may be used. For example, the electrode force may be 1.5 kN to 10.0 kN. The electrode force may be the same or a different value than in the first current process. The current value during current passing may be constant or may be varied as appropriate during current passing, such as in upslope current, as long as the current value I1 or more.

• Pressure hold process

After the second current process described above, the pressure hold process is performed, in which is pressure is held on the sheet combination in a no-current state.

Pressure hold time: 10 ms or more

As described above, the second current process enlarges the nugget as described above, and therefore the nugget is in a molten state at the end of the second current process. Therefore, when releasing the electrode from the sheet combination immediately after the second current passage process, cracks may occur from the nugget end or corona bond end between steel sheets of the sheet combination toward the inside of the nugget, resulting in a decrease in joint quality. Such cracks are more pronounced in a sheet combination of material to be joined where a boundary between the steel sheets of the sheet combination is located away from the center position (1/2 thickness position of the sheet combination) of the overall sheet combination thickness. Examples of such sheet combinations include sheet combinations that consist of two steel sheets of different thicknesses stacked on top of each other, and sheet combinations that consist of three or more steel sheets stacked on top of each other, regardless of their thickness. From the viewpoint of effectively preventing the occurrence of such cracks regardless of the sheet combination, after the second current process, the sheet combination is held under pressure in the no-current state, and the pressure hold time is 10 ms or more. The pressure hold time is preferably 20 ms or more. An upper limit of the pressure hold time is not particularly limited. From the viewpoint of production efficiency, the pressure hold time is preferably 2000 ms or less.

The electrode force in the pressure hold process is not particularly limited. For example, the electrode force may be 1.5 kN to 10.0 kN. The electrode force in the pressure hold process may be the same as or different from that of the first current process and the second current process.

Conditions other than those described above are not particularly limited, and a conventional method may be used.

Further, the resistance spot welding method according to an embodiment of the present invention obtains a nugget diameter of the desired size while suppressing the occurrence of cracking in the welded portion regardless of the influence of a disturbance and regardless of sheet combination. Therefore, the resistance spot welding method according to an embodiment of the present invention is particularly suitable when applied to difficult welding conditions, for example, one or more of the following conditions (A) to (E):

(A) a welding electrode has an inclined angle relative to the sheet combination,
(B) the pair of welding electrodes are off-center,
(C) before pressing the sheet combination, there is a gap between the fixed welding electrode and the sheet combination (hereinafter also referred to as an electrode-sheet combination gap),
(D) before pressing the sheet combination, there is at least one gap between the steel sheets of the sheet combination (hereinafter also referred to as a sheet gap), and
(E) on the surface of the sheet combination, the shortest distance from the center of the welding contact point to an end face of the sheet combination (hereinafter also referred to as a shortest end face distance) is 10 mm or less.

Here, the "inclined angle" in (A) is the angle of the axis of the welding electrode relative to the perpendicular direction to the surface of the sheet combination. The "welding electrode has an inclined angle relative to the sheet combination" means a state in which the inclined angle is not 0°, that is, the perpendicular direction to the surface of the sheet combination and the axis of the welding electrode (at least one of the axis of the upper electrode or the axis of the lower electrode) are not parallel to each other.

The "pair of welding electrodes are off-center" in (B) means a state in which the axis of the upper electrode and the axis of the lower electrode of the welding electrodes are not aligned. Further, the amount of misalignment is the distance between the axis of the upper electrode and the axis of the lower electrode of the welding electrodes.

The "before pressing the sheet combination" in (C) and (D) means after the sheet combination is placed in a welding device including a fixed welding electrode (corresponding to the lower electrode as one example) and a driven welding electrode (corresponding to the upper electrode as one example), and before the driven welding electrode is moved to start pressing the sheet combination.

The resistance spot welding method according to an embodiment of the present invention is applicable not only to a sheet combination of two steel sheets overlapped, but also to a sheet combination of three or more steel sheets overlapped.

[4] Method of producing welded member

The method of producing a welded member according to an embodiment of the present invention includes the process of joining a sheet combination by the resistance spot welding method. This allows a stable nugget diameter of the desired size to be secured while suppressing deformation of the shoulders of the sheet combination and therefore suppressing cracking of the welded portion. As a result, it is possible to produce various welded members with high production efficiency, in particular automotive parts and the like that include a galvanized steel sheet having high corrosion resistance on an outermost surface.

EXAMPLES

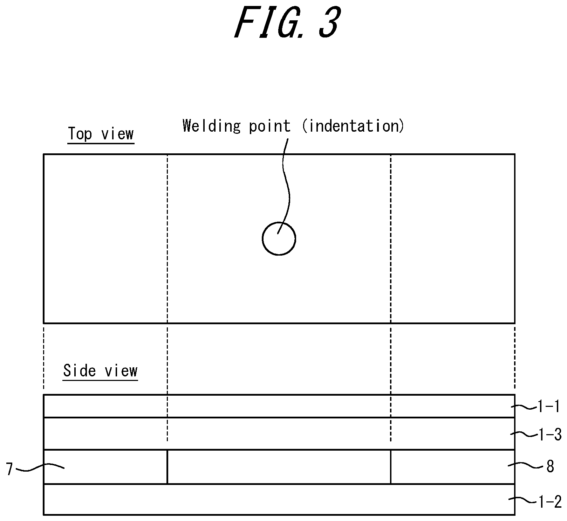

Resistance spot welding was performed on the sheet combinations listed in Table 1 under the conditions listed in Table 2 to produce welded joints. For each sample number, disturbances (welding conditions (A) to (E) as described above) were simulated as listed in Table 1. In Table 1, "-" in columns (A), (B), (C), and (E) means that the corresponding condition was not satisfied. Further, in a sheet combination simulating a sheet gap of (D), for example, three 30 mm $\times$ 100 mm steel sheets were stacked on top of each other and 30 mm $\times$ 25 mm spacers 7, 8 were placed between the second and third steel sheets to provide a 2 mm sheet gap, as illustrated in FIG. 3. Note that "0 mm" in the sheet gap column of (D) means no sheet gap. Further, in Table 1, "-" in column (E) means that the welded portion (nugget) was formed so that the center of the 30 mm $\times$ 100 mm steel sheet was the center of the weld contact point. Further, the first current process was performed with an upslope current, except for sample number 2. For sample number 2, current was passed at a constant current value. The second current process was performed in the order of cooling and then current passing, and each cycle of cooling and current passing was performed under the same conditions.

Further, resistance spot welding was performed at room temperature and with the welding electrode always being water cooled. Both the upper electrode (driven welding electrode) and the lower electrode (fixed welding electrode) used a DR-type electrode made of chromium copper having a tip diameter of 6 mm and a curvature radius of 40 mm. Further, the electrode force was controlled by driving the upper electrode with a servo motor, and DC power was supplied during current passing. For all sample numbers, the sheet combinations were arranged so that the first steel sheet came into contact with the upper electrode (driven welding electrode).

Further, for the welded joints obtained, by the methods described above, the indentation ratio b/T of the shoulders of the sheet combination was measured and the nugget diameter $x_1$ at the boundary level between the first steel sheet and the second steel sheet was measured. For sheet combinations of three steel sheets, the nugget diameter $x_2$ at the boundary level between the second steel sheet and the third steel sheet was measured. For sheet combinations of four steel sheets, the nugget diameter $x_3$ at the boundary level between the third steel sheet and the fourth steel sheet was measured. The measurement results are listed in Table 3.

Further, surfaces and cross-sections of the nuggets of the welded joints were observed to visually check for the presence of shoulder cracking and cracking from between the steel sheets towards the interior of the nuggets. The results are listed in Table 3.

In Table 3, A, B, and C in the shoulder cracking column mean the following, respectively.

A (pass, especially good): no cracking
B (pass): cracks occurred, but length was less than 50 $\mu$m
C (fail): cracks of 50 $\mu$m or more in length occurred

The evaluation column in Table 3 is labeled "Pass" when the shoulder cracking evaluation was A or B, there was no crack from the steel sheets towards the interior of the nugget, and the nugget diameter $x_k$ was $3.5\sqrt{t_k}$ or more, and "Fail" when any of the above cases was not true, that is, one of the target properties was not obtained.

Further, additional samples were separately prepared under the same conditions as each sample number, but with current applied only up to the first current process. Further, for these samples, the nugget diameter $x_1'$ at the boundary level between the first steel sheet and the second steel sheet was measured. For sheet combinations of three steel sheets, the nugget diameter $x_2'$ at the boundary level between the second steel sheet and the third steel sheet was measured. For sheet combinations of four steel sheets, the nugget diameter $x_3'$ at the boundary level between the third steel sheet and the fourth steel sheet was measured. Then, $x_1 - x_1'$, $x_2 - x_2'$, and $x_3 - x_3'$ were calculated. Here, when the maximum value of these values was 0.05 mm or more, the column "Enlargement of nugget in second current process" in Table 2 is labeled "Yes", and when the maximum value of these values was less than 0.05 mm, the column is labeled "No".

[Table 1]

Table 1

| Sample No. | 1st steel sheet Ref. sign | 1st steel sheet Strength (MPa) | 1st steel sheet Type | 1st steel sheet Thickness (mm) | 2nd steel sheet Ref. sign | 2nd steel sheet Strength (MPa) | 2nd steel sheet Type | 2nd steel sheet Thickness (mm) | 3rd steel sheet Ref. sign | 3rd steel sheet Strength (MPa) | 3rd steel sheet Type | 3rd steel sheet Thickness (mm) | 4th steel sheet Ref. sign | 4th steel sheet Strength (MPa) | 4th steel sheet Type | 4th steel sheet Thickness (mm) | n (Sheets) | T (mm) | $T/t_U$ | $T/t_L$ | (A) Inclination angle (°) | (B) Mis-alignment (mm) | (C) Electrode-sheet combination gap (mm) | (D) 1st-2nd sheet gap (mm) | (D) 2nd-3rd sheet gap (mm) | (D) 3rd-4th sheet gap (mm) | (E) Shortest distance to end face (mm) |
|---|---|---|---|---|---|---|---|---|---|---|---|---|---|---|---|---|---|---|---|---|---|---|---|---|---|---|---|
| 1 | A | 270 | GA | 0.7 | B | 1470 | GA | 1.2 | C | 1470 | GA | 1.4 | - | - | - | - | 3 | 3.3 | 4.71 | 2.36 | - | - | - | 0 | 2 | - | - |
| 2 | A | 270 | GA | 0.7 | B | 1470 | GA | 1.2 | C | 1470 | GA | 1.4 | - | - | - | - | 3 | 3.3 | 4.71 | 2.36 | - | - | - | 0 | 2 | - | - |
| 3 | A | 270 | GA | 0.7 | B | 1470 | GA | 1.2 | C | 1470 | GA | 1.4 | - | - | - | - | 3 | 3.3 | 4.71 | 2.36 | - | - | - | 0 | 2 | - | - |
| 4 | A | 270 | GA | 0.7 | B | 1470 | GA | 1.2 | C | 1470 | GA | 1.4 | - | - | - | - | 3 | 3.3 | 4.71 | 2.36 | - | - | - | 0 | 2 | - | - |
| 5 | A | 270 | GA | 0.7 | B | 1470 | GA | 1.2 | C | 1470 | GA | 1.4 | - | - | - | - | 3 | 3.3 | 4.71 | 2.36 | - | - | - | 0 | 2 | - | - |
| 6 | A | 270 | GA | 0.7 | B | 1470 | GA | 1.2 | C | 1470 | GA | 1.4 | - | - | - | - | 3 | 3.3 | 4.71 | 2.36 | - | - | - | 0 | 2 | - | - |
| 7 | A | 270 | GA | 0.7 | B | 1470 | GA | 1.2 | C | 1470 | GA | 1.4 | - | - | - | - | 3 | 3.3 | 4.71 | 2.36 | - | - | - | 0 | 2 | - | - |
| 8 | A | 270 | GA | 0.7 | B | 1470 | GA | 1.2 | C | 1470 | GA | 1.4 | - | - | - | - | 3 | 3.3 | 4.71 | 2.36 | - | - | - | 0 | 2 | - | - |
| 9 | A | 270 | GA | 0.7 | B | 1470 | GA | 1.2 | C | 1470 | GA | 1.4 | - | - | - | - | 3 | 3.3 | 4.71 | 2.36 | - | - | - | 0 | 2 | - | - |
| 10 | A | 270 | GA | 0.7 | B | 1470 | GA | 1.2 | C | 1470 | GA | 1.4 | - | - | - | - | 3 | 3.3 | 4.71 | 2.36 | - | - | - | 0 | 2 | - | - |
| 11 | A | 270 | GA | 0.7 | B | 1470 | GA | 1.2 | C | 1470 | GA | 1.4 | - | - | - | - | 3 | 3.3 | 4.71 | 2.36 | - | - | - | 0 | 2 | - | - |
| 12 | A | 270 | GA | 0.7 | B | 1470 | GA | 1.2 | C | 1470 | GA | 1.4 | - | - | - | - | 3 | 3.3 | 4.71 | 2.36 | - | - | - | 0 | 2 | - | - |
| 13 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 14 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 15 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 16 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 17 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 18 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 19 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 20 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 21 | D | 270 | GA | 0.6 | E | 980 | CR | 1.3 | F | 980 | GA | 1.0 | G | 1470 | GA | 1.2 | 4 | 4.1 | 6.83 | 3.42 | 4 | 1 | 2 | 0 | 2 | 0 | - |
| 22 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | 5 |
| 23 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 24 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 25 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 26 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 27 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |

GA: galvannealed steel sheet
GI: hot-dip galvanized steel sheet
GF: Galfan steel sheet
GL: Galvalume steel sheet
CR: Steel sheet without coating (cold-rolled steel sheet)

Table 1 (cont'd)

| Sample No. | 1st steel sheet | | | | 2nd steel sheet | | | | 3rd steel sheet | | | | 4th steel sheet | | | | n | T | T/t$_U$ | T/t$_L$ | Disturbance | | | | | | |
|---|---|---|---|---|---|---|---|---|---|---|---|---|---|---|---|---|---|---|---|---|---|---|---|---|---|---|---|
| | | | | | | | | | | | | | | | | | | | | | (A) | (B) | (C) | (D) | | | (E) |
| | Ref. sign | Strength | Type | Thickness | Ref. sign | Strength | Type | Thickness | Ref. sign | Strength | Type | Thickness | Ref. sign | Strength | Type | Thickness | Sheets | mm | | | Inclination angle | Mis-alignment | Electrode-sheet combination gap | 1st-2nd sheet gap | 2nd-3rd sheet gap | 3rd-4th sheet gap | Shortest distance to end face |
| | | MPa | | mm | | MPa | | mm | | MPa | | mm | | MPa | | mm | | | | | ° | mm | mm | mm | mm | mm | mm |
| 28 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 29 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 30 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 31 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 32 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | - |
| 33 | D | 270 | GA | 0.6 | E | 980 | CR | 1.3 | F | 980 | GA | 1.0 | G | 1470 | GA | 1.2 | 4 | 4.1 | 6.83 | 3.42 | 4 | 1 | 2 | 0 | 2 | 0 | - |
| 34 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | 5 |
| 35 | D | 270 | GA | 0.6 | E | 980 | CR | 1.3 | F | 980 | GA | 1.0 | G | 1470 | GA | 1.2 | 4 | 4.1 | 6.83 | 3.42 | 4 | - | 2 | 0 | 2 | 0 | 5 |
| 36 | H | 980 | CR | 1.1 | I | 270 | CR | 1.1 | J | 1800 | CR | 1.2 | K | 1470 | GA | 1.3 | 4 | 4.7 | 4.27 | 3.62 | - | - | - | 0 | 0 | 0 | - |
| 37 | H | 980 | CR | 1.1 | I | 270 | CR | 1.1 | J | 1800 | CR | 1.2 | K | 1470 | GA | 1.3 | 4 | 4.7 | 4.27 | 3.62 | - | - | - | 0 | 0 | 0 | - |
| 38 | H | 980 | CR | 1.1 | I | 270 | CR | 1.1 | J | 1800 | CR | 1.2 | K | 1470 | GA | 1.3 | 4 | 4.7 | 4.27 | 3.62 | - | - | - | 0 | 0 | 0 | - |
| 39 | H | 980 | CR | 1.1 | I | 270 | CR | 1.1 | J | 1800 | CR | 1.2 | K | 1470 | GA | 1.3 | 4 | 4.7 | 4.27 | 3.62 | - | - | - | 0 | 0 | 0 | - |
| 40 | H | 980 | CR | 1.1 | I | 270 | CR | 1.1 | J | 1800 | CR | 1.2 | K | 1470 | GA | 1.3 | 4 | 4.7 | 4.27 | 3.62 | - | - | - | 0 | 0 | 0 | - |
| 41 | L | 1800 | GA | 1.2 | M | 1470 | GA | 1.8 | - | - | - | - | - | - | - | - | 2 | 3.0 | 2.50 | 1.67 | - | - | - | 0 | 0 | 0 | - |
| 42 | L | 1800 | GA | 1.2 | M | 1470 | GA | 1.8 | - | - | - | - | - | - | - | - | 2 | 3.0 | 2.50 | 1.67 | - | - | - | 0 | 0 | 0 | - |
| 43 | N | 270 | GI | 0.6 | O | 980 | CR | 1.3 | F | 980 | GI | 1.0 | P | 1470 | GI | 1.2 | 4 | 4.1 | 6.83 | 3.42 | 4 | - | 2 | 0 | 2 | 0 | - |
| 44 | N | 270 | GI | 0.6 | O | 980 | CR | 1.3 | F | 980 | GI | 1.0 | P | 1470 | GI | 1.2 | 4 | 4.1 | 6.83 | 3.42 | 4 | - | 2 | 0 | 2 | 0 | - |
| 45 | N | 270 | GI | 0.6 | O | 980 | CR | 1.3 | F | 980 | GI | 1.0 | P | 1470 | GI | 1.2 | 4 | 4.1 | 6.83 | 3.42 | 4 | - | 2 | 0 | 2 | 0 | - |
| 46 | Q | 270 | GF | 0.6 | R | 980 | CR | 1.3 | F | 980 | GF | 1.0 | S | 1470 | GF | 1.2 | 4 | 4.1 | 6.83 | 3.42 | 4 | - | 2 | 0 | 2 | 0 | - |
| 47 | Q | 270 | GF | 0.6 | R | 980 | CR | 1.3 | F | 980 | GF | 1.0 | S | 1470 | GF | 1.2 | 4 | 4.1 | 6.83 | 3.42 | 4 | - | 2 | 0 | 2 | 0 | - |
| 48 | Q | 270 | GF | 0.6 | R | 980 | CR | 1.3 | F | 980 | GF | 1.0 | S | 1470 | GF | 1.2 | 4 | 4.1 | 6.83 | 3.42 | 4 | - | 2 | 0 | 2 | 0 | - |
| 49 | T | 270 | Ecogal | 0.6 | U | 980 | CR | 1.3 | F | 980 | Ecogal | 1.0 | V | 1470 | Ecogal | 1.2 | 4 | 4.1 | 6.83 | 3.42 | 4 | - | 2 | 0 | 2 | 0 | - |
| 50 | T | 270 | Ecogal | 0.6 | U | 980 | CR | 1.3 | F | 980 | Ecogal | 1.0 | V | 1470 | Ecogal | 1.2 | 4 | 4.1 | 6.83 | 3.42 | 4 | - | 2 | 0 | 2 | 0 | - |
| 51 | T | 270 | Ecogal | 0.6 | U | 980 | CR | 1.3 | F | 980 | Ecogal | 1.0 | V | 1470 | Ecogal | 1.2 | 4 | 4.1 | 6.83 | 3.42 | 4 | - | 2 | 0 | 2 | 0 | - |
| 52 | W | 270 | GL | 0.6 | X | 980 | CR | 1.3 | F | 980 | GL | 1.0 | Y | 1470 | GL | 1.2 | 4 | 4.1 | 6.83 | 3.42 | 4 | - | 2 | 0 | 2 | 0 | - |
| 53 | W | 270 | GL | 0.6 | X | 980 | CR | 1.3 | F | 980 | GL | 1.0 | Y | 1470 | GL | 1.2 | 4 | 4.1 | 6.83 | 3.42 | 4 | - | 2 | 0 | 2 | 0 | - |
| 54 | W | 270 | GL | 0.6 | X | 980 | CR | 1.3 | F | 980 | GL | 1.0 | Y | 1470 | GL | 1.2 | 4 | 4.1 | 6.83 | 3.42 | 4 | - | 2 | 0 | 2 | 0 | - |

GA: galvannealed steel sheet
GI: hot-dip galvanized steel sheet
GF: Galfan steel sheet
GL: Galvalume steel sheet
CR: Steel sheet without coating (cold-rolled steel sheet)

Table 2

| Sample No. | Electrode force | First current process | | | | | | | Second current process | | | | | | | | | | | Pressure hold process | Remarks |
| | | Current value | | | Weld time | | | Expulsion occurrence | Cooling time | Current passing | | Cooling and current passing cycles | Ratio of total cooling time β to total weld time γ | | | | | Enlargement of nugget in second current process | Expulsion occurrence | Pressure hold time | |
| | | Upslope start current Is | Upslope end current If | I1 | α | Expression (4) lower limit (1st sheet) | Expression (5) lower limit (nth sheet) | | Cooling time | Current value | Weld time | | β/γ | Expression (6) lower limit (1st sheet) | Expression (6) upper limit (1st sheet) | Expression (7) lower limit (nth sheet) | Expression (7) upper limit (nth sheet) | | | | |
| | kN | kA | kA | kA | ms | ms | ms | | ms | kA | ms | No. | | | | | | | | ms | |
| 1 | 3.5 | 4.5 | 6.0 | 6.0 | 200 | 108.6 | 76.8 | No | 20 | 8.0 | 40 | 4 | 0.50 | 0.22 | 4.34 | 0.15 | 3.07 | Yes | No | 15 | Example |
| 2 | 3.5 | - | - | 5.0 | 200 | 108.6 | 76.8 | No | 20 | 8.0 | 40 | 4 | 0.50 | 0.22 | 4.34 | 0.15 | 3.07 | Yes | No | 20 | Example |
| 3 | 3.5 | 5.5 | 7.0 | 7.0 | 200 | 108.6 | 76.8 | No | 20 | 10.0 | 40 | 4 | 0.50 | 0.22 | 4.34 | 0.15 | 3.07 | Yes | Yes | 40 | Example |
| 4 | 3.5 | 6.5 | 8.0 | 8.0 | 200 | 108.6 | 76.8 | No | 10 | 8.0 | 15 | 4 | 0.67 | 0.22 | 4.34 | 0.15 | 3.07 | Yes | Yes | 60 | Example |
| 5 | 3.5 | 6.5 | 8.0 | 8.0 | 200 | 108.6 | 76.8 | No | 60 | 9.0 | 40 | 4 | 1.50 | 0.22 | 4.34 | 0.15 | 3.07 | Yes | No | 40 | Example |
| 6 | 3.5 | 6.5 | 8.0 | 8.0 | 200 | 108.6 | 76.8 | No | 60 | 8.0 | 40 | 4 | 1.50 | 0.22 | 4.34 | 0.15 | 3.07 | No | No | 40 | Comparative Example |
| 7 | 3.5 | 6.5 | 7.0 | 7.0 | 60 | 108.6 | 76.8 | No | 80 | 9.0 | 40 | 4 | 2.00 | 0.22 | 4.34 | 0.15 | 3.07 | Yes | Yes | 40 | Comparative Example |
| 8 | 3.5 | 6.5 | 8.0 | 8.0 | 200 | 108.6 | 76.8 | No | 20 | 8.5 | 140 | 4 | 0.14 | 0.22 | 4.34 | 0.15 | 3.07 | Yes | Yes | 20 | Comparative Example |
| 9 | 3.5 | 6.5 | 8.0 | 8.0 | 140 | 108.6 | 76.8 | No | 100 | 9.0 | 20 | 4 | 5.00 | 0.22 | 4.34 | 0.15 | 3.07 | No | No | 60 | Comparative Example |
| 10 | 3.5 | 6.5 | 8.0 | 8.0 | 140 | 108.6 | 76.8 | No | 100 | 9.0 | 20 | 4 | 5.00 | 0.22 | 4.34 | 0.15 | 3.07 | No | No | 5 | Comparative Example |
| 11 | 3.5 | 6.5 | 8.0 | 8.0 | 200 | 108.6 | 76.8 | No | 10 | 8.0 | 10 | 4 | 1.00 | 0.22 | 4.34 | 0.15 | 3.07 | No | No | 60 | Comparative Example |
| 12 | 3.5 | 6.5 | 8.0 | 8.0 | 200 | 108.6 | 76.8 | No | 5 | 8.0 | 15 | 4 | 0.33 | 0.22 | 4.34 | 0.15 | 3.07 | Yes | Yes | 60 | Comparative Example |
| 13 | 3.5 | 6.5 | 8.0 | 8.0 | 200 | 130.7 | 92.4 | No | 20 | 9.5 | 40 | 3 | 0.50 | 0.26 | 5.23 | 0.18 | 3.70 | Yes | No | 15 | Example |
| 14 | 3.5 | 7.5 | 8.5 | 8.5 | 200 | 130.7 | 92.4 | Yes | 20 | 9.0 | 40 | 3 | 0.50 | 0.26 | 5.23 | 0.18 | 3.70 | Yes | No | 40 | Example |
| 15 | 3.5 | 6.5 | 8.0 | 8.0 | 200 | 130.7 | 92.4 | No | 20 | 10.5 | 40 | 3 | 0.50 | 0.26 | 5.23 | 0.18 | 3.70 | Yes | Yes | 20 | Example |
| 16 | 3.5 | 6.5 | 8.0 | 8.0 | 200 | 130.7 | 92.4 | No | 60 | 13.0 | 20 | 3 | 3.00 | 0.26 | 5.23 | 0.18 | 3.70 | Yes | Yes | 100 | Example |
| 17 | 3.5 | 7.0 | 8.5 | 8.5 | 200 | 130.7 | 92.4 | No | 60 | 9.5 | 40 | 3 | 1.50 | 0.26 | 5.23 | 0.18 | 3.70 | Yes | No | 80 | Example |
| 18 | 3.5 | 7.0 | 8.0 | 8.0 | 140 | 130.7 | 92.4 | No | 20 | 12.0 | 40 | 3 | 0.50 | 0.26 | 5.23 | 0.18 | 3.70 | Yes | Yes | 80 | Example |
| 19 | 3.5 | 6.5 | 8.0 | 8.0 | 200 | 130.7 | 92.4 | No | 10 | 9.5 | 15 | 3 | 0.67 | 0.26 | 5.23 | 0.18 | 3.70 | Yes | Yes | 80 | Example |
| 20 | 3.5 | 6.5 | 8.0 | 8.0 | 200 | 130.7 | 92.4 | No | 40 | 9.0 | 140 | 3 | 0.29 | 0.26 | 5.23 | 0.18 | 3.70 | Yes | Yes | 40 | Example |
| 21 | 3.5 | 6.5 | 8.0 | 8.0 | 200 | 130.7 | 92.4 | No | 20 | 10.5 | 40 | 3 | 0.50 | 0.26 | 5.23 | 0.18 | 3.70 | Yes | Yes | 60 | Example |
| 22 | 3.5 | 6.5 | 8.0 | 8.0 | 200 | 130.7 | 92.4 | No | 20 | 10.5 | 40 | 3 | 0.50 | 0.26 | 5.23 | 0.18 | 3.70 | Yes | Yes | 80 | Example |
| 23 | 3.5 | 6.5 | 8.0 | 8.0 | 200 | 130.7 | 92.4 | No | - | - | - | - | - | - | - | - | - | - | - | - | Comparative Example |
| 24 | 3.5 | 7.0 | 8.0 | 8.0 | 120 | 130.7 | 92.4 | No | 20 | 12.0 | 40 | 3 | 0.50 | 0.26 | 5.23 | 0.18 | 3.70 | Yes | Yes | 60 | Comparative Example |
| 25 | 3.5 | 8.0 | 9.0 | 9.0 | 120 | 130.7 | 92.4 | Yes | 20 | 12.0 | 40 | 3 | 0.50 | 0.26 | 5.23 | 0.18 | 3.70 | Yes | Yes | 40 | Comparative Example |
| 26 | 3.5 | 6.5 | 8.0 | 8.0 | 200 | 130.7 | 92.4 | No | 20 | 9.0 | 120 | 3 | 0.17 | 0.26 | 5.23 | 0.18 | 3.70 | Yes | Yes | 20 | Comparative Example |
| 27 | 3.5 | 6.5 | 8.0 | 8.0 | 200 | 130.7 | 92.4 | No | 120 | 13.0 | 20 | 3 | 6.00 | 0.26 | 5.23 | 0.18 | 3.70 | No | No | 40 | Comparative Example |

[Table 2]

EP 4 484 045 B1

Table 2 (cont'd)

| Sample No. | Electrode force | First current process | | | | | | | Second current process | | | | | | | | | | | Pressure hold process | Remarks |
| | | Current value | | | Weld time | | | Expulsion occurrence | Cooling time | Current passing | | Cooling and current passing cycles | Ratio of total cooling time β to total weld time γ | | | | | Enlargement of nugget in second current process | Expulsion occurrence | Pressure hold time | |
| | | Upslope start current Is | Upslope end current If | II | α | Expression (4) lower limit (1st sheet) | Expression (5) lower limit (nth sheet) | | | Current value | Weld time | | β/γ | Expression (6) lower limit (1st sheet) | Expression (6) upper limit (1st sheet) | Expression (7) lower limit (nth sheet) | Expression (7) upper limit (nth sheet) | | | | |
| | kN | kA | kA | kA | ms | ms | ms | | ms | kA | ms | No. | | | | | | | | ms | |
| 28 | 3.5 | 6.5 | 8.0 | 8.0 | 200 | 130.7 | 92.4 | No | 120 | 14.0 | 20 | 3 | 6.00 | 0.26 | 5.23 | 0.18 | 3.70 | Yes | No | 80 | Comparative Example |
| 29 | 3.5 | 7.0 | 8.5 | 8.5 | 200 | 130.7 | 92.4 | No | 60 | 8.5 | 40 | 3 | 1.50 | 0.26 | 5.23 | 0.18 | 3.70 | No | No | 80 | Comparative Example |
| 30 | 3.5 | 6.5 | 8.0 | 8.0 | 200 | 130.7 | 92.4 | No | 20 | 9.0 | 120 | 3 | 0.17 | 0.26 | 5.23 | 0.18 | 3.70 | Yes | Yes | 5 | Comparative Example |
| 31 | 3.5 | 6.5 | 8.0 | 8.0 | 200 | 130.7 | 92.4 | No | 10 | 9.5 | 10 | 3 | 1.00 | 0.26 | 5.23 | 0.18 | 3.70 | No | No | 80 | Comparative Example |
| 32 | 3.5 | 6.5 | 8.0 | 8.0 | 200 | 130.7 | 92.4 | No | 5 | 9.5 | 15 | 3 | 0.33 | 0.26 | 5.23 | 0.18 | 3.70 | Yes | Yes | 80 | Comparative Example |
| 33 | 3.5 | 7.0 | 8.0 | 8.0 | 80 | 130.7 | 92.4 | No | 20 | 13.0 | 40 | 3 | 0.50 | 0.26 | 5.23 | 0.18 | 3.70 | Yes | Yes | 100 | Comparative Example |
| 34 | 3.5 | 6.5 | 8.0 | 8.0 | 200 | 130.7 | 92.4 | No | 20 | 10.5 | 120 | 3 | 0.17 | 0.26 | 5.23 | 0.18 | 3.70 | Yes | Yes | 40 | Comparative Example |
| 35 | 3.5 | 6.5 | 8.0 | 8.0 | 200 | 130.7 | 92.4 | No | 120 | 10.5 | 20 | 3 | 6.00 | 0.26 | 5.23 | 0.18 | 3.70 | No | Yes | 15 | Comparative Example |
| 36 | 3.5 | 6.5 | 8.0 | 8.0 | 200 | - | 95.1 | No | 20 | 9.0 | 40 | 4 | 0.50 | - | - | 0.19 | 3.80 | Yes | No | 100 | Example |
| 37 | 3.5 | 6.5 | 8.0 | 8.0 | 200 | - | 95.1 | No | 20 | 10.5 | 40 | 4 | 0.50 | - | - | 0.19 | 3.80 | Yes | Yes | 100 | Example |
| 38 | 3.5 | 6.5 | 8.0 | 8.0 | 60 | - | 95.1 | No | 20 | 10.5 | 40 | 4 | 0.50 | - | - | 0.19 | 3.80 | Yes | Yes | 100 | Comparative Example |
| 39 | 3.5 | 6.5 | 8.0 | 8.0 | 200 | - | 95.1 | No | 20 | 10.5 | 120 | 4 | 0.17 | - | - | 0.19 | 3.80 | Yes | Yes | 100 | Comparative Example |
| 40 | 3.5 | 6.5 | 8.0 | 8.0 | 200 | - | 95.1 | No | 100 | 10.5 | 20 | 4 | 5.00 | - | - | 0.19 | 3.80 | No | No | 100 | Comparative Example |
| 41 | 3.5 | 5.0 | 6.5 | 6.5 | 140 | 79.1 | 64.5 | No | 20 | 9.0 | 100 | 2 | 0.20 | 0.16 | 3.16 | 0.13 | 2.58 | Yes | Yes | 120 | Example |
| 42 | 3.5 | 5.0 | 6.5 | 6.5 | 140 | 79.1 | 64.5 | No | 10 | 9.0 | 100 | 2 | 0.10 | 0.16 | 3.16 | 0.13 | 2.58 | Yes | Yes | 120 | Comparative Example |
| 43 | 3.5 | 6.5 | 8.0 | 8.0 | 200 | 130.7 | 92.4 | No | 20 | 10.5 | 40 | 3 | 0.50 | 0.26 | 5.23 | 0.18 | 3.70 | Yes | Yes | 20 | Example |
| 44 | 3.5 | 6.5 | 8.0 | 8.0 | 200 | 130.7 | 92.4 | No | 20 | 9.0 | 120 | 3 | 0.17 | 0.26 | 5.23 | 0.18 | 3.70 | Yes | Yes | 20 | Comparative Example |
| 45 | 3.5 | 6.5 | 8.0 | 8.0 | 200 | 130.7 | 92.4 | No | 120 | 13.0 | 20 | 3 | 6.00 | 0.26 | 5.23 | 0.18 | 3.70 | No | No | 40 | Comparative Example |
| 46 | 3.5 | 6.5 | 8.0 | 8.0 | 200 | 130.7 | 92.4 | No | 20 | 10.5 | 40 | 3 | 0.50 | 0.26 | 5.23 | 0.18 | 3.70 | Yes | Yes | 20 | Example |
| 47 | 3.5 | 6.5 | 8.0 | 8.0 | 200 | 130.7 | 92.4 | No | 20 | 9.0 | 120 | 3 | 0.17 | 0.26 | 5.23 | 0.18 | 3.70 | Yes | Yes | 20 | Comparative Example |
| 48 | 3.5 | 6.5 | 8.0 | 8.0 | 200 | 130.7 | 92.4 | No | 120 | 13.0 | 20 | 3 | 6.00 | 0.26 | 5.23 | 0.18 | 3.70 | No | No | 40 | Comparative Example |
| 49 | 3.5 | 6.5 | 8.0 | 8.0 | 200 | 130.7 | 92.4 | No | 20 | 10.5 | 40 | 3 | 0.50 | 0.26 | 5.23 | 0.18 | 3.70 | Yes | Yes | 20 | Example |
| 50 | 3.5 | 6.5 | 8.0 | 8.0 | 200 | 130.7 | 92.4 | No | 20 | 9.0 | 120 | 3 | 0.17 | 0.26 | 5.23 | 0.18 | 3.70 | Yes | Yes | 20 | Comparative Example |
| 51 | 3.5 | 6.5 | 8.0 | 8.0 | 200 | 130.7 | 92.4 | No | 120 | 13.0 | 20 | 3 | 6.00 | 0.26 | 5.23 | 0.18 | 3.70 | No | No | 40 | Comparative Example |
| 52 | 3.5 | 6.5 | 8.0 | 8.0 | 200 | 130.7 | 92.4 | No | 20 | 10.5 | 40 | 3 | 0.50 | 0.26 | 5.23 | 0.18 | 3.70 | Yes | Yes | 20 | Example |
| 53 | 3.5 | 6.5 | 8.0 | 8.0 | 200 | 130.7 | 92.4 | No | 20 | 9.0 | 120 | 3 | 0.17 | 0.26 | 5.23 | 0.18 | 3.70 | Yes | Yes | 20 | Comparative Example |
| 54 | 3.5 | 6.5 | 8.0 | 8.0 | 200 | 130.7 | 92.4 | No | 120 | 13.0 | 20 | 3 | 6.00 | 0.26 | 5.23 | 0.18 | 3.70 | No | No | 40 | Comparative Example |

[Table 3]

[Table 3]

EP 4 484 045 B1

Table 3

| Sample No. | Shoulder indentation ratio | | | Nugget diameter | | | Welded portion cracking | | | Evaluation | Remarks |
| | b/T | Expression (1) upper limit (1st sheet) | Expression (2) upper limit (nth sheet) | $X_1$ | $X_2$ | $X_3$ | Shoulder cracking | | Crack from between steel sheets toward nugget interior | | |
| | | | | $\times\sqrt{t_1}$ | $\times\sqrt{t_2}$ | $\times\sqrt{t_3}$ | 1st sheet surface | nth sheet surface | | | |
|---|---|---|---|---|---|---|---|---|---|---|---|
| 1 | 0.120 | 0.526 | 0.319 | 3.9 | 5.3 | - | A | A | No | Pass | Example |
| 2 | 0.180 | 0.526 | 0.319 | 3.5 | 5.1 | - | A | B | No | Pass | Example |
| 3 | 0.270 | 0.526 | 0.319 | 4.5 | 5.5 | - | A | B | No | Pass | Example |
| 4 | 0.190 | 0.526 | 0.319 | 3.7 | 5.2 | - | A | B | No | Pass | Example |
| 5 | 0.140 | 0.526 | 0.319 | 3.5 | 5.2 | - | A | A | No | Pass | Example |
| 6 | 0.090 | 0.526 | 0.319 | 3.4 | 4.9 | - | A | A | No | Fail | Comparative Example |
| 7 | 0.090 | 0.526 | 0.319 | 2.8 | 3.4 | - | A | A | No | Fail | Comparative Example |
| 8 | 0.320 | 0.526 | 0.319 | 5.3 | 5.1 | - | A | C | No | Fail | Comparative Example |
| 9 | 0.100 | 0.526 | 0.319 | 3.2 | 4.3 | - | A | A | No | Fail | Comparative Example |
| 10 | 0.100 | 0.526 | 0.319 | 3.2 | 4.3 | - | A | A | Yes | Fail | Comparative Example |
| 11 | 0.090 | 0.526 | 0.319 | 3.4 | 4.9 | - | A | A | No | Fail | Comparative Example |
| 12 | 0.320 | 0.526 | 0.319 | 3.5 | 5.0 | - | A | C | No | Fail | Comparative Example |
| 13 | 0.080 | 0.437 | 0.265 | 4.6 | 5.7 | 5.4 | A | A | No | Pass | Example |
| 14 | 0.150 | 0.437 | 0.265 | 4.5 | 5.6 | 5.3 | A | A | No | Pass | Example |
| 15 | 0.170 | 0.437 | 0.265 | 4.9 | 6.0 | 5.7 | A | B | No | Pass | Example |
| 16 | 0.230 | 0.437 | 0.265 | 3.6 | 5.4 | 5.1 | A | B | No | Pass | Example |
| 17 | 0.100 | 0.437 | 0.265 | 3.5 | 5.5 | 5.0 | A | A | No | Pass | Example |
| 18 | 0.190 | 0.437 | 0.265 | 3.6 | 5.3 | 4.8 | A | B | No | Pass | Example |
| 19 | 0.180 | 0.437 | 0.265 | 3.6 | 5.5 | 5.0 | A | B | No | Pass | Example |
| 20 | 0.240 | 0.437 | 0.265 | 5.8 | 6.3 | 5.9 | A | B | No | Pass | Example |

| Sample No. | b/T | Shoulder indentation ratio | | Nugget diameter | | | Welded portion cracking | | | Evaluation | Remarks |
|---|---|---|---|---|---|---|---|---|---|---|---|
| | | Expression (1) upper limit (1st sheet) | Expression (2) upper limit (nth sheet) | $X_1$ | $X_2$ | $X_3$ | Shoulder cracking | | Crack from between steel sheets toward nugget interior | | |
| | | | | $\times\sqrt{t_1}$ | $\times\sqrt{t_2}$ | $\times\sqrt{t_3}$ | 1st sheet surface | nth sheet surface | | | |
| 21 | 0.190 | 0.437 | 0.265 | 4.8 | 5.8 | 5.3 | A | B | No | Pass | Example |
| 22 | 0.180 | 0.437 | 0.265 | 4.9 | 5.9 | 5.5 | A | B | No | Pass | Example |
| 23 | 0.070 | 0.437 | 0.265 | 2.9 | 4.9 | 4.5 | A | A | No | Fail | Comparative Example |
| 24 | 0.170 | 0.437 | 0.265 | 3.3 | 5.1 | 4.7 | A | B | No | Fail | Comparative Example |
| 25 | 0.270 | 0.437 | 0.265 | 3.3 | 5.0 | 4.7 | A | C | No | Fail | Comparative Example |
| 26 | 0.300 | 0.437 | 0.265 | 6.6 | 6.8 | 6.3 | A | C | No | Fail | Comparative Example |
| 27 | 0.070 | 0.437 | 0.265 | 2.9 | 4.9 | 4.5 | A | A | No | Fail | Comparative Example |

Table 3 (cont'd)

| Sample No. | Shoulder indentation ratio | | | Nugget diameter | | | Welded portion cracking | | | Evaluation | Remarks |
|---|---|---|---|---|---|---|---|---|---|---|---|
| | b/T | Expression (1) upper limit (1st sheet) | Expression (2) upper limit (nth sheet) | $X_1$ | $X_2$ | $X_3$ | Shoulder cracking | | Crack from between steel sheets toward nugget interior | | |
| | | | | $\times\sqrt{t_1}$ | $\times\sqrt{t_2}$ | $\times\sqrt{t_3}$ | 1st sheet surface | nth sheet surface | | | |
| 28 | 0.270 | 0.437 | 0.265 | 3.3 | 5.3 | 4.9 | A | C | No | Fail | Comparative Example |
| 29 | 0.090 | 0.437 | 0.265 | 3.3 | 5.3 | 4.8 | A | A | No | Fail | Comparative Example |
| 30 | 0.300 | 0.437 | 0.265 | 6.6 | 6.8 | 6.3 | A | C | Yes | Fail | Comparative Example |
| 31 | 0.070 | 0.437 | 0.265 | 2.9 | 4.9 | 4.5 | A | A | No | Fail | Comparative Example |
| 32 | 0.270 | 0.437 | 0.265 | 3.5 | 5.2 | 4.9 | A | C | No | Fail | Comparative Example |
| 33 | 0.280 | 0.437 | 0.265 | 3.4 | 5.3 | 4.8 | A | C | No | Fail | Comparative Example |
| 34 | 0.310 | 0.437 | 0.265 | 6.1 | 6.9 | 6.5 | A | C | No | Fail | Comparative Example |
| 35 | 0.070 | 0.437 | 0.265 | 2.9 | 4.9 | 4.5 | A | A | No | Fail | Comparative Example |
| 36 | 0.090 | - | 0.258 | 4.3 | 5.2 | 5.0 | A | A | No | Pass | Example |
| 37 | 0.180 | - | 0.258 | 4.6 | 5.6 | 5.5 | A | B | No | Pass | Example |
| 38 | 0.150 | - | 0.258 | 2.7 | 3.8 | 3.3 | A | B | No | Fail | Comparative Example |
| 39 | 0.280 | - | 0.258 | 4.8 | 5.9 | 5.7 | A | C | No | Fail | Comparative Example |
| 40 | 0.080 | - | 0.258 | 3.3 | 4.0 | 3.8 | A | A | No | Fail | Comparative Example |
| 41 | 0.240 | 0.280 | 0.379 | 5.4 | - | - | B | A | No | Pass | Example |
| 42 | 0.300 | 0.280 | 0.379 | 6.0 | - | - | C | B | No | Fail | Comparative Example |
| 43 | 0.160 | 0.437 | 0.265 | 4.8 | 5.9 | 5.7 | A | B | No | Pass | Example |
| 44 | 0.290 | 0.437 | 0.265 | 6.5 | 6.9 | 6.2 | A | C | No | Fail | Comparative Example |
| 45 | 0.060 | 0.437 | 0.265 | 2.8 | 4.8 | 4.5 | A | A | No | Fail | Comparative Example |
| 46 | 0.190 | 0.437 | 0.265 | 5.0 | 6.0 | 5.8 | A | B | No | Pass | Example |
| 47 | 0.300 | 0.437 | 0.265 | 6.7 | 6.9 | 6.3 | A | C | No | Fail | Comparative Example |
| 48 | 0.080 | 0.437 | 0.265 | 3.0 | 4.9 | 4.5 | A | A | No | Fail | Comparative Example |
| 49 | 0.180 | 0.437 | 0.265 | 4.9 | 6.1 | 5.7 | A | B | No | Pass | Example |

(continued)

| Sample No. | b/T | Shoulder indentation ratio | | Nugget diameter | | | Welded portion cracking | | | Evaluation | Remarks |
|---|---|---|---|---|---|---|---|---|---|---|---|
| | | Expression (1) upper limit (1st sheet) | Expression (2) upper limit (nth sheet) | $X_1$ $\times\sqrt{t_1}$ | $X_2$ $\times\sqrt{t_2}$ | $X_3$ $\times\sqrt{t_3}$ | Shoulder cracking | | Crack from between steel sheets toward nugget interior | | |
| | | | | | | | 1st sheet surface | nth sheet surface | | | |
| 50 | 0.310 | 0.437 | 0.265 | 6.6 | 6.8 | 6.4 | A | C | No | Fail | Comparative Example |
| 51 | 0.080 | 0.437 | 0.265 | 2.9 | 5.0 | 4.6 | A | A | No | Fail | Comparative Example |
| 52 | 0.170 | 0.437 | 0.265 | 4.8 | 5.8 | 5.6 | A | B | No | Pass | Example |
| 53 | 0.280 | 0.437 | 0.265 | 6.4 | 6.7 | 6.3 | A | C | No | Fail | Comparative Example |
| 54 | 0.070 | 0.437 | 0.265 | 2.8 | 4.7 | 4.4 | A | A | No | Fail | Comparative Example |

According to Table 3, for all of the Examples, nugget diameters of the desired size were obtained while suppressing the occurrence of cracking in the welded portion.

In contrast, for the Comparative Examples having sample numbers 6, 9, 10, 11, 27, 29, 31, 35, 40, 45, 48, 51, and 54, the nuggets did not enlarge sufficiently in the second current process to obtain the desired size of nugget diameter.

For sample numbers 7, 24, 25, 33, and 38, weld time in the first current process was insufficient, and therefore the desired size of nugget diameter was not obtained. When the weld time of the first current process was insufficient, and the current value of the first current process was increased to increase the nugget diameter, nuggets of the desired size were not obtained, as in sample numbers 25 and 33. At the same time, deformation of shoulders of the sheet combination became excessive, and therefore the shoulder indentation ratio became excessive, and shoulder cracking became more pronounced.

For sample numbers 8, 26, 30, 34, 39, 42, 44, 47, 50, and 53, the ratio of cooling time in the second current process was too small and $\beta/\gamma$ did not satisfy the defined range. As a result, the amount of expulsion (the amount of spattered molten metal) could not be sufficiently controlled in the second current process, resulting in excessive deformation of the shoulders of the sheet combination and, consequently, excessive shoulder indentation ratio, and shoulder cracking became more pronounced.

For sample numbers 9, 10, 27, 28, 35, 40, 45, 48, 51, and 54, the ratio of cooling time in the second current process was too large and $\beta/\gamma$ did not satisfy the defined range. As a result, the nuggets did not enlarge sufficiently to obtain the desired size of nugget diameter. When the ratio of cooling time in the second current process was too large and the current value of the second current process was increased to increase the nugget diameter, a nugget of the desired size was not obtained, as in sample number 28. At the same time, deformation of shoulders of the sheet combination became excessive, and therefore the shoulder indentation ratio became excessive, and shoulder cracking became more pronounced.

For sample numbers 10 and 30, the pressure hold time was too short, and therefore cracks occurred between the steel sheets towards the nugget interior.

For sample numbers 11 and 31, weld time per cycle in the second current process was insufficient, and therefore the nuggets did not enlarge sufficiently, and the desired size of nugget diameter was not obtained.

For sample numbers 12 and 32, cooling time per cycle in the second current process was insufficient, and therefore deformation of shoulders of the sheet combination became excessive and therefore the shoulder indentation ratio became excessive, and shoulder cracking became more pronounced.

For sample number 23, the second current process was not performed, that is, only one stage of current passing was performed, and the desired size of nugget diameter was not obtained.

REFERENCE SIGNS LIST

1-1     steel sheet (upper steel sheet)
1-2     steel sheet (lower steel sheet)
1-3     steel sheet
2     sheet combination
3     welding electrode (upper electrode)
4     welding electrode (lower electrode)
5     nugget
6     shoulder
7     spacer
8     spacer

**Claims**

1. A welded joint comprising a sheet combination of n overlapped steel sheets and a nugget joining the steel sheets, wherein

   n is an integer greater than or equal to 2,
   in the sheet combination, at least one of the first steel sheet or the nth steel sheet in order from the top is a galvanized steel sheet,
   an indentation ratio b/T of shoulders of the sheet combination satisfies,
   in the case of [Condition 1], the following Expression (1),
   in the case of [Condition 2], the following Expression (2),

in the case of [Condition 3], Expressions (1) and (2),
in the sheet combination, nugget diameter $x_k$, in mm, at each boundary level between a kth steel sheet and a (k+1)th steel sheet is $3.5\sqrt{t_k}$ or more, k is an integer from 1 to n-1, $t_k$ is the thickness in mm of the thinner of the kth steel sheet and the (k+1)th steel sheet,

$$b/T \leq 0.6/(T/t_U)^{0.5} \times (980/S_U)^{0.5} \qquad ...(1)$$

$$b/T \leq 0.6/(T/t_L)^{0.5} \times (980/S_L)^{0.5} \qquad ...(2)$$

where
b is shoulder indentation in mm,
T is total thickness in mm of the n steel sheets,
tu is thickness in mm of the first steel sheet,
$t_L$ is thickness in mm of the nth steel sheet,
Su is tensile strength in MPa of the first steel sheet,
$S_L$ is tensile strength in MPa of the nth steel sheet,
the shoulder indentation b is determined by the following Expression (3),

$$b = T - a \qquad ...(3)$$

where
a is minimum thickness in mm of the sheet combination at a distance of 1 mm from a nugget end,
and [Condition 1] to [Condition 3] are as follows:

[Condition 1]
of the first steel sheet and the nth steel sheet of the sheet combination, only the first steel sheet is a galvanized steel sheet,
[Condition 2]
of the first steel sheet and the nth steel sheet of the sheet combination, only the nth steel sheet is a galvanized steel sheet,
[Condition 3]
of the first steel sheet and the nth steel sheet of the sheet combination, both the first steel sheet and the nth steel sheet are galvanized steel sheets.

2. A welded member comprising the welded joint according to claim 1.

3. A resistance spot welding method of squeezing, by a pair of welding electrodes, a sheet combination of n overlapped steel sheets and passing a current while applying an electrode force to join the sheet combination, wherein

n is an integer greater than or equal to 2,
in the sheet combination, at least one of the first steel sheet or the nth steel sheet in order from the top is a galvanized steel sheet,
the resistance spot welding method comprising:

a first current process of forming a nugget;
a second current process of enlarging the nugget formed in the first current passage process; and
after the second current process, a pressure hold process of holding pressure on the sheet combination in a no-current state,
wherein,
in the first current process, current is passed for a weld time of $\alpha$ ms,
the weld time $\alpha$, in ms, satisfies,
in the case of [Condition 1], the following Expression (4),
in the case of [Condition 2], the following Expression (5),
in the case of [Condition 3], Expressions (4) and (5),
the second current process comprises:

cooling where no current is passed for a cooling time of 10 ms or more; and
current passing for a weld time of 15 ms or more with a current value greater than or equal to a current value of the first current process, the cooling and the current passing each being carried out at least once, wherein
a ratio $\beta/\gamma$ of total cooling time $\beta$ to total weld time $\gamma$ in the second current process satisfies,
in the case of [Condition 1], Expression (6),
in the case of [Condition 2], Expression (7),
in the case of [Condition 3], Expressions (6) and (7),
in the pressure hold process, the pressure hold time is 10 ms or more,

$$\alpha \geq 50 \times (T/t_U)^{0.5} \qquad \ldots(4)$$

$$\alpha \geq 50 \times (T/t_L)^{0.5} \qquad \ldots(5)$$

$$0.10 \times (T/t_U)^{0.5} \leq \beta/\gamma \leq 2 \times (T/t_U)^{0.5} \qquad \ldots(6)$$

$$0.10 \times (T/t_L)^{0.5} \leq \beta/\gamma \leq 2 \times (T/t_L)^{0.5} \qquad \ldots(7)$$

where
T is total thickness in mm of the n steel sheets,
tu is thickness in mm of the first steel sheet,
$t_L$ is thickness in mm of the nth steel sheet,
and [Condition 1] to [Condition 3] are as follows:

[Condition 1]
of the first steel sheet and the nth steel sheet of the sheet combination, only the first steel sheet is a galvanized steel sheet,
[Condition 2]
of the first steel sheet and the nth steel sheet of the sheet combination, only the nth steel sheet is a galvanized steel sheet,
[Condition 3]
of the first steel sheet and the nth steel sheet of the sheet combination, both the first steel sheet and the nth steel sheet are galvanized steel sheets.

4. The resistance spot welding method according to claims 3, satisfying one or more of the following conditions (A) to (E),

(A) a welding electrode has an inclined angle relative to the sheet combination,
(B) the pair of welding electrodes are off-center,
(C) before pressing the sheet combination, there is a gap between the fixed welding electrode and the sheet combination,
(D) before pressing the sheet combination, there is at least one gap between the steel sheets of the sheet combination, and
(E) on the surface of the sheet combination, the shortest distance from the center of the welding contact point to an end face of the sheet combination is 10 mm or less.

5. A method of producing a welded member, comprising a process of joining a sheet combination of n overlapped steel sheets by the resistance spot welding method according to claim 3 or 4, wherein n is an integer greater than or equal to 2.

**Patentansprüche**

1. Schweißverbindung, umfassend eine Blechkombination aus n überlappenden Stahlblechen und einen die Stahlbleche verbindenden Nugget, wobei

n eine ganze Zahl größer oder gleich 2 ist,
in der Blechkombination mindestens eines von dem ersten Stahlblech oder dem n-ten Stahlblech in einer Reihenfolge von oben ein galvanisiertes Stahlblech ist,
ein Einbuchtungsverhältnis b/T von Schultern der Blechkombination Folgendes erfüllt,
in dem Fall von [Bedingung 1] den folgenden Ausdruck (1),
in dem Fall von [Bedingung 2] den folgenden Ausdruck (2),
in dem Fall von [Bedingung 3] Ausdrücke (1) und (2),
in der Blechkombination ein Nugget-Durchmesser $x_k$ in mm an jeder Grenzfläche zwischen einem k-ten Stahlblech und einem (k+1)-ten Stahlblech $3,5 \sqrt{t_k}$ oder mehr ist, k eine ganze Zahl von 1 bis n-1 ist, $t_k$ die Dicke des dünneren des k-ten Stahlblechs und des (k+1)-ten Stahlblechs in mm ist,

$$b/T \leq 0,6/(T/t_U)^{0,5} \times (980/S_U)^{0,5} \qquad ...(1)$$

$$b/T \leq 0,6/(T/t_L)^{0,5} \times (980/S_L)^{0,5} \qquad ...(2),$$

wobei
b eine Schultereinbuchtung in mm ist,
T eine Gesamtdicke der n Stahlbleche in mm ist,
$t_U$ eine Dicke des ersten Stahlblechs in mm ist,
$t_L$ eine Dicke des n-ten Stahlblechs in mm ist,
$S_U$ eine Zugfestigkeit des ersten Stahlblechs in MPa ist,
$S_L$ eine Zugfestigkeit des n-ten Stahlblechs in MPa ist,
die Schultereinbuchtung b durch den folgenden Ausdruck (3) bestimmt wird,

$$b = T - a \qquad ...(3),$$

wobei
a eine Mindestdicke der Blechkombination in mm in einem Abstand von 1 mm von einem Nugget-Ende ist,
und [Bedingung 1] bis [Bedingung 3] wie folgt sind:

[Bedingung 1]
des ersten Stahlblechs und des n-ten Stahlblechs der Blechkombination, nur das erste Stahlblech ist ein galvanisiertes Stahlblech,
[Bedingung 2]
des ersten Stahlblechs und des n-ten Stahlblechs der Blechkombination, nur das n-te Stahlblech ist ein galvanisiertes Stahlblech,
[Bedingung 3]
des ersten Stahlblechs und des n-ten Stahlblechs der Blechkombination, sowohl das erste Stahlblech als auch das n-te Stahlblech sind galvanisierte Stahlbleche.

2. Schweißbauteil, umfassend die Schweißverbindung nach Anspruch 1.

3. Widerstandspunktschweißverfahren zum Quetschen einer Blechkombination aus n überlappenden Stahlblechen durch ein Paar von Schweißelektroden und Anlegen eines Stroms, während eine Elektrodenkraft aufgebracht wird, um die Blechkombination zu verbinden, wobei

n eine ganze Zahl größer oder gleich 2 ist,
in der Blechkombination mindestens eines von dem ersten Stahlblech oder dem n-ten Stahlblech in einer Reihenfolge von oben ein galvanisiertes Stahlblech ist,
das Widerstandspunktschweißverfahren Folgendes umfasst:

einen ersten Stromvorgang zum Ausbilden eines Nuggets;
einen zweiten Stromvorgang zum Vergrößern des in dem ersten Stromanlegevorgang ausgebildeten Nuggets; und
nach dem zweiten Stromvorgang einen Druckhaltevorgang zum Halten eines Drucks auf die Blechkombination in einem stromlosen Zustand,
wobei

in dem ersten Stromvorgang für eine Schweißzeit von $\alpha$ ms Strom angelegt wird,
die Schweißzeit $\alpha$ in ms Folgendes erfüllt,
in dem Fall von [Bedingung 1] den folgenden Ausdruck (4),
in dem Fall von [Bedingung 2] den folgenden Ausdruck (5),
in dem Fall von [Bedingung 3] Ausdrücke (4) und (5),
der zweite Stromvorgang Folgendes umfasst:

Kühlen, wobei für eine Kühlzeit von 10 ms oder mehr kein Strom angelegt wird; und
Stromanlegen für eine Schweißzeit von 15 ms oder mehr mit einem Stromwert größer oder gleich einem Stromwert des ersten Stromvorgangs, wobei das Kühlen und das Stromanlegen jeweils mindestens einmal durchgeführt werden, wobei
ein Verhältnis $\beta/\gamma$ einer Gesamtkühlzeit $\beta$ zu einer Gesamtschweißzeit $\gamma$ in dem zweiten Stromvorgang Folgendes erfüllt,
in dem Fall von [Bedingung 1] Ausdruck (6),
in dem Fall von [Bedingung 2] Ausdruck (7),
in dem Fall von [Bedingung 3] Ausdrücke (6) und (7),
die Druckhaltezeit in dem Druckhaltevorgang 10 ms oder mehr ist,

$$\alpha \geq 50 \times (T/t_U)^{0,5} \qquad \ldots (4)$$

$$\alpha \geq 50 \times (T/t_L)^{0,5} \qquad \ldots (5)$$

$$0,10 \times (T/t_U)^{0,5} \leq \beta/\gamma \leq 2 \times (T/t_U)^{0,5} \qquad \ldots (6)$$

$$0,10 \times (T/t_L)^{0,5} \leq \beta/\gamma \leq 2 \times (T/t_L)^{0,5} \qquad \ldots (7),$$

wobei
T eine Gesamtdicke der n Stahlbleche in mm ist,
$t_U$ eine Dicke des ersten Stahlblechs in mm ist,
$t_L$ eine Dicke des n-ten Stahlblechs in mm ist,
und [Bedingung 1] bis [Bedingung 3] wie folgt sind:

[Bedingung 1]
des ersten Stahlblechs und des n-ten Stahlblechs der Blechkombination, nur das erste Stahlblech ist ein galvanisiertes Stahlblech,
[Bedingung 2]
des ersten Stahlblechs und des n-ten Stahlblechs der Blechkombination, nur das n-te Stahlblech ist ein galvanisiertes Stahlblech,
[Bedingung 3]
des ersten Stahlblechs und des n-ten Stahlblechs der Blechkombination, sowohl das erste Stahlblech als auch das n-te Stahlblech sind galvanisierte Stahlbleche.

4. Widerstandspunktschweißverfahren nach Anspruch 3, das eine oder mehrere der folgenden Bedingungen (A) bis (E) erfüllt,

(A) eine Schweißelektrode weist einen schrägen Winkel relativ zu der Blechkombination auf,
(B) das Paar von Schweißelektroden ist nicht zentriert,
(C) vor dem Pressen der Blechkombination gibt es einen Spalt zwischen der feststehenden Schweißelektrode und der Blechkombination,
(D) vor dem Pressen der Blechkombination gibt es mindestens einen Spalt zwischen den Stahlblechen der Blechkombination und
(E) auf der Oberfläche der Blechkombination ist der kürzeste Abstand von der Mitte des Schweißkontaktpunktes zu einer Endfläche der Blechkombination 10 mm oder weniger.

5. Verfahren zum Herstellen eines Schweißbauteils, umfassend einen Vorgang zum Verbinden einer Blechkombination aus n überlappenden Stahlblechen durch das Widerstandspunktschweißverfahren nach Anspruch 3 oder 4, wobei n eine ganze Zahl größer oder gleich 2 ist.

**Revendications**

**1.** Joint soudé comprenant une combinaison de tôles constituée de n tôles d'acier superposées et un noyau de soudure reliant les tôles d'acier, dans lequel

n représente un nombre entier supérieur ou égal à 2,
dans la combinaison de tôles, au moins l'une parmi la première tôle d'acier ou la nième tôle d'acier en partant du haut est une tôle d'acier galvanisé,
un rapport d'indentation b/T des épaulements de la combinaison de tôles satisfait à,
dans le cas de la [Condition 1], l'expression (1) suivante,
dans le cas de la [Condition 2], l'expression (2) suivante,
dans le cas de la [Condition 3], les expressions (1) et (2),
dans la combinaison de tôles, le diamètre du noyau de soudure $x_k$, en mm, à chaque niveau limite entre une kième tôle d'acier et une (k+1)ième tôle d'acier est supérieur ou égal à 3,5 $\sqrt{t_k}$, k représente un nombre entier de 1 à n-1, $t_k$ représente l'épaisseur en mm de la tôle la plus mince parmi la kième tôle d'acier et la (k+1)ième tôle d'acier,

$$b/T \leq 0,6/(T/t_U)^{0,5} \times (980/S_U)^{0,5} \qquad ...(1)$$

$$b/T \leq 0,6/(T/t_L)^{0,5} \times (980/S_L)^{0,5} \qquad ...(2)$$

dans lesquelles
b représente une indentation d'épaulement en mm,
T représente l'épaisseur totale en mm des n tôles d'acier,
$t_U$ représente l'épaisseur en mm de la première tôle d'acier,
$t_L$ représente l'épaisseur en mm de la nième tôle d'acier,
$S_U$ représente la résistance à la traction en MPa de la première tôle d'acier,
$S_L$ représente la résistance à la traction en MPa de la nième tôle d'acier,
l'indentation d'épaulement b est déterminée par l'expression (3) suivante,

$$b = T - a \qquad ...(3)$$

dans laquelle
a représente l'épaisseur minimale en mm de la combinaison de tôles à une distance de 1 mm d'une extrémité du noyau de soudure, et les [Condition 1] à [Condition 3] sont comme suit :

[Condition 1]
parmi la première tôle d'acier et la nième tôle d'acier de la combinaison de tôles, seule la première tôle d'acier est une tôle d'acier galvanisé,
[Condition 2]
parmi la première tôle d'acier et la nième tôle d'acier de la combinaison de tôles, seule la nième tôle d'acier est une tôle d'acier galvanisé,
[Condition 3]
parmi la première tôle d'acier et la nième tôle d'acier de la combinaison de tôles, à la fois la première tôle d'acier et la nième tôle d'acier sont des tôles d'acier galvanisé.

**2.** Élément soudé comprenant le joint soudé selon la revendication 1.

**3.** Procédé de soudage par points par résistance consistant à comprimer, à l'aide d'une paire d'électrodes de soudage, une combinaison de tôles constituée de n tôles d'acier superposées et à faire passer un courant tout en appliquant un effort sur les électrodes pour relier la combinaison de tôles, dans lequel n représente un nombre entier supérieur ou égal à 2,

dans la combinaison de tôles, au moins l'une parmi la première tôle d'acier ou la nième tôle d'acier en partant du haut est une tôle d'acier galvanisé,

le procédé de soudage par points par résistance comprenant :

un premier processus de courant de formation d'un noyau de soudure ;
un second processus de courant visant à agrandir le noyau de soudure formé lors du premier processus de passage de courant ; et
après le second processus de courant, un processus de maintien de pression consistant à maintenir une pression sur la combinaison de tôles dans un état sans courant,
dans lequel,
dans le premier processus de courant, on fait passer le courant pendant une durée de soudage de $\alpha$ ms,
la durée de soudage $\alpha$, en ms, satisfait à,
dans le cas de la [Condition 1], l'expression (4) suivante,
dans le cas de la [Condition 2], l'expression (5) suivante,
dans le cas de la [Condition 3], les expressions (4) et (5),
le second processus de courant comprend :

un refroidissement pendant lequel aucun courant ne circule durant une durée de refroidissement supérieure ou égale à 10 ms ; et
une circulation du courant pendant une durée de soudage supérieure ou égale à 15 ms avec une valeur de courant supérieure ou égale à une valeur de courant du premier processus de courant, le refroidissement et la circulation du courant étant chacun effectués au moins une fois, dans lequel
un rapport $\beta/\gamma$ de la durée de refroidissement totale $\beta$ à la durée de soudage totale y dans le second processus de courant satisfait à,
dans le cas de la [Condition 1], l'expression (6),
dans le cas de la [Condition 2], l'expression (7),
dans le cas de la [Condition 3], les expressions (6) et (7),
pendant le processus de maintien de pression, la durée de maintien de pression est supérieure ou égale à 10 ms,

$$\alpha \geq 50 \times (T/t_U)^{0,5} \qquad \qquad ...(4)$$

$$\alpha \geq 50 \times (T/t_L)^{0,5} \qquad \qquad ...(5)$$

$$0,10 \times (T/t_U)^{0,5} \leq \beta/\gamma \leq 2 \times (T/t_U)^{0,5} \qquad ...(6)$$

$$0,10 \times (T/t_L)^{0,5} \leq \beta/\gamma \leq 2 \times (T/t_L)^{0,5} \qquad ...(7)$$

dans lesquelles
T représente l'épaisseur totale en mm des n tôles d'acier,
$t_U$ représente l'épaisseur en mm de la première tôle d'acier,
$t_L$ représente l'épaisseur en mm de la nième tôle d'acier,
et les [Condition 1] à [Condition 3] sont comme suit :

[Condition 1]
parmi la première tôle d'acier et la nième tôle d'acier de la combinaison de tôles, seule la première tôle d'acier est une tôle d'acier galvanisé,
[Condition 2]
parmi la première tôle d'acier et la nième tôle d'acier de la combinaison de tôles, seule la nième tôle d'acier est une tôle d'acier galvanisé,
[Condition 3]
parmi la première tôle d'acier et la nième tôle d'acier de la combinaison de tôles, à la fois la première tôle d'acier et la nième tôle d'acier sont des tôles d'acier galvanisé.

4. Procédé de soudage par points par résistance selon la revendication 3, satisfaisant à une ou plusieurs des conditions (A) à (E) suivantes,

(A) une électrode de soudage a un angle incliné par rapport à la combinaison de tôles,

(B) la paire d'électrodes de soudage est décentrée,

(C) avant d'appliquer une pression sur la combinaison de tôles, il existe un espace entre l'électrode de soudage fixe et la combinaison de tôles,

(D) avant d'appliquer une pression sur la combinaison de tôles, il existe au moins un espace entre les tôles d'acier de la combinaison de tôles, et

(E) sur la surface de la combinaison de tôles, la distance la plus courte entre le centre du point de contact de soudage et une face d'extrémité de la combinaison de tôles est inférieure ou égale à 10 mm.

5. Procédé de fabrication d'un élément soudé, comprenant un processus de liaison d'une combinaison de tôles comprenant n tôles d'acier superposées par le procédé de soudage par points par résistance selon la revendication 3 ou 4, dans lequel n représente un nombre entier supérieur ou égal à 2.

# *FIG. 1*

*FIG. 2*

Nugget end          Nugget end

1mm 1mm          1mm 1mm

6          6

x₁

1st sheet          1-1
2nd sheet          1-3  2
3rd sheet          1-2

x₂

6          6

Thickness of sheet combination at distance 1 mm from nugget end

Thickness of sheet combination at distance 1 mm from nugget end

# *FIG. 3*

Top view    Welding point (indentation)

Side view

1-1
1-3
7    8
1-2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003103377 A
- JP 2003236676 A
- WO 2016159169 A1
- JP 2017047476 A
- WO 2018159764 A1
- JP 2020127958 A
- WO 2019124464 A1
- EP 3278917 A1